# EUROPEAN PATENT APPLICATION

(11) **EP 4 852 498 A1**
(43) Date of publication of application: **09.12.2026**
(21) Application number: 24920868.7
(22) Date of filing: 31.01.2024
(51) Int. Cl.: H04W 24/08

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); LIU, Wendong, Dongguan, Guangdong 523860 (CN)
(74) Representative: RGTH
(86) International application number: PCT/CN2024/074878
(87) International publication number: WO 2025/160795

(57) **Abstract**

Provided are a wireless communication method and a communication device. The method comprises: in response to the occurrence of a first event, a first device switching a scheme for executing a first communication task from a first scheme to a second scheme, wherein the first event comprises performing performance evaluation on the performance of the first scheme. The embodiments of the present application specify that during the performance evaluation of a first scheme, a scheme for executing a first communication task is switched from the first scheme to a second scheme, thereby helping to unify the understandings of communication devices to reduce the probability of failure in executing the first communication task. Furthermore, the performance evaluation of the first scheme is usually triggered by a performance anomaly of the first scheme. Therefore, during the process of performing performance evaluation on the first scheme, switching to the second scheme to execute the first communication task helps to prevent failure in executing the first communication task due to a performance anomaly of the first scheme.

## Description

### TECHNICAL FIELD

The present application relates to the field of communication technology, and more specifically, to a wireless communication method and a communication device.

### BACKGROUND

Currently, communication devices typically use a first scheme to perform a first communication task. However, the performance of the first scheme is affected by many factors, and it cannot be guaranteed that the performance of the first scheme remains in a good state at all times. If the performance of the first scheme is affected and the first scheme is still used to execute the first communication task, the execution of the first communication task may be poor, affecting the communication quality between the communication devices. Therefore, during the process of using the first scheme to execute the first communication task, a performance evaluation of the first scheme is required to assess the performance of the first scheme. However, current protocols do not specify how to perform the performance evaluation of the first scheme, which may lead to different understandings between communication devices and result in communication failure.

### SUMMARY

The present application provides a wireless communication method and a communication device. Various aspects of the present application are introduced below.

In a first aspect, a wireless communication method is provided, including: in response to occurrence of a first event, switching, by a first device, a scheme for executing a first communication task from a first scheme to a second scheme, where the first event includes performing a performance evaluation on performance of the first scheme.

In a second aspect, a wireless communication method is provided, including: transmitting, by a second device, first indication information to a first device, where the first indication information is used to trigger a performance evaluation on performance of a first scheme, the first scheme is used to execute a first communication task, and the first communication task is executed based on a second scheme during the performance evaluation.

In a third aspect, a communication device is provided, the communication device is a first device and includes: a processing unit, configured to, in response to occurrence of a first event, switch a scheme for executing a first communication task from a first scheme to a second scheme, where the first event includes performing a performance evaluation on the performance of the first scheme.

In a fourth aspect, a communication device is provided, the communication device is a second device and includes: a transmitting unit, configured to transmit first indication information to a first device, where the first indication information is used to trigger a performance evaluation on performance of a first scheme, the first scheme is used to execute a first communication task, and the first communication task is executed based on a second scheme during the performance evaluation.

In a fifth aspect, a communication device is provided, including a processor, a memory, and a communication interface, the memory is configured to store one or more computer programs, the processor is configured to invoke the computer program in the memory, to cause the communication device to execute part or all of the steps of the methods in the above aspects.

In a sixth aspect, an embodiment of the present application provides a communication system, the system including the above-mentioned terminal device and/or network device. In another possible design, the system may also include other devices that interact with the first device or the second device in the solutions provided by the embodiments of the present application.

In a seventh aspect, an embodiment of the present application provides a computer-readable storage medium, the computer-readable storage medium stores a computer program, and the computer program causes a communication device (e.g., a first device or a second device) to execute part or all of the steps of the methods in the above aspects.

In an eighth aspect, an embodiment of the present application provides a computer program product, where the computer program product includes a non-transitory computer-readable storage medium storing a computer program, and the computer program is operable to cause a communication device (e.g., a first device or a second device) to execute part or all of the steps of the methods in the above aspects. In some implementations, the computer program product may be a software installation package.

In a ninth aspect, an embodiment of the present application provides a chip, the chip includes a memory and a processor, the processor is capable of invoking and running a computer program from the memory to implement part or all of the steps described in the methods of the above aspects.

In the embodiments of the present application, it is specified that during the performance evaluation of the first scheme, a scheme for executing the first communication task is switched from the first scheme to the second scheme, which helps to unify the understanding of the communication device and reduce the probability of failure in executing the first communication task.

On the other hand, performance evaluation of the first scheme is usually triggered by an abnormal performance of the first scheme. Therefore, during the performance evaluation of the first scheme, switching to the second scheme to execute the first communication task helps to avoid a failure of the first communication task due to the abnormal performance of the first scheme.

### BRIEF DESCRIPTION OF DRAWINGS

FIG. 1 is a wireless communication system 100 to which an embodiment of the present application is applied.
FIG. 2 is a schematic diagram of channel estimation and signal recovery applicable to an embodiment of the present application.
FIG. 3 is a schematic diagram of a CSI feedback system based on an AI model applicable to an embodiment of the present application.
FIG. 4 is a schematic diagram of a positioning scheme based on an AI model applicable to an embodiment of the present application.
FIG. 5 is a schematic diagram of a beam management scheme based on an AI model applicable to an embodiment of the present application.
FIG. 6 is a schematic flowchart of a wireless communication method according to an embodiment of the present application.
FIG. 7 is a schematic flowchart of a wireless communication method according to another embodiment of the present application.
FIG. 8 is a schematic diagram of a process of whether a first scheme is used normally and whether the first scheme can continue to be used in an embodiment of the present application.
FIG. 9 to FIG. 11 are schematic diagrams of a performance monitoring phase, a performance evaluation phase, and a performance judgment phase in an embodiment of the present application.
FIG. 12 is a schematic diagram of a communication device according to an embodiment of the present application.
FIG. 13 is a schematic diagram of a communication device according to an embodiment of the present application.
FIG. 14 is a schematic structural diagram of a communication apparatus according to an embodiment of the present application.

### DESCRIPTION OF EMBODIMENTS

The technical solutions in the present application will be described below with reference to the accompanying drawings.

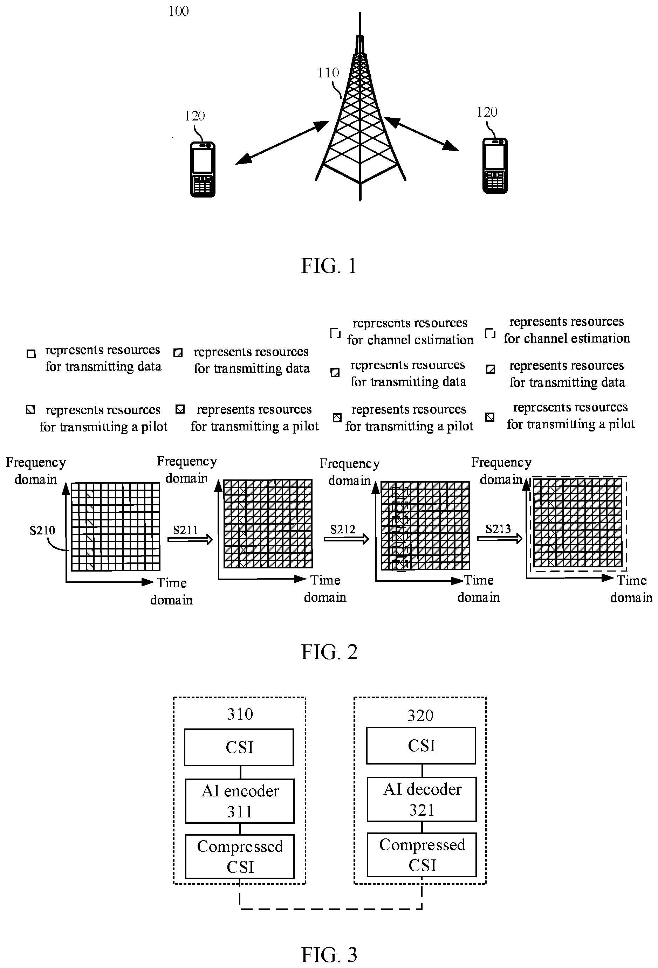

FIG. 1 is a wireless communication system 100 to which an embodiment of the present application is applied. The wireless communication system 100 may include a network device 110 and a terminal device 120. The network device 110 may be a device that communicates with the terminal device 120. The network device 110 may provide communication coverage for a specific geographic area and may communicate with the terminal device 120 located within the coverage area.

FIG. 1 exemplarily shows one network device and two terminals. Optionally, the wireless communication system 100 may include multiple network devices, and the coverage area of each network device may include another quantity of terminal devices, which is not limited in the embodiments of the present application.

Optionally, the wireless communication system 100 may further include other network entities such as a network controller and a mobility management entity, which is not limited in the embodiments of the present application.

It should be understood that the technical solutions of the embodiments of the present application may be applied to various communication systems, for example: a fifth generation (5th generation, 5G) system or new radio (new radio, NR), a long term evolution (long term evolution, LTE) system, an LTE frequency division duplex (frequency division duplex, FDD) system, an LTE time division duplex (time division duplex, TDD) system, or the like. The technical solutions provided by the present application may also be applied to future communication systems, such as a sixth generation mobile communication system, or a satellite communication system.

The terminal device in the present application embodiment may also be referred to as a user equipment (user equipment, UE), an access terminal, a subscriber unit, a subscriber station, a mobile station, a mobile station (mobile station, MS), a mobile terminal (mobile terminal, MT), a remote station, a remote terminal, a mobile device, a user terminal, a terminal, a wireless communication device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart household device communicate with each other, without relaying a communication signal by using a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or replace with the following names, for example: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network side device in a 6G network, a device that functions as a base station in a future communications system, or the like. The base station may support networks with a same access technology or different access technologies. A specific technology and a specific device form used by the network device are not limited in embodiments of this application.

The base station may be fixed or mobile. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

With development of artificial intelligence (artificial intelligence, AI) technology, an AI model is increasingly introduced in a communication process. For ease of understanding, the following describes an AI model used in the communication process with reference to FIG. 2 to FIG. 5.

### Channel estimation and signal recovery based on AI model

Due to the complexity and time-varying of the wireless channel environment, in a wireless communication system (e.g., the wireless communication system introduced above), a receiver needs to recover the received signal based on the channel estimation result. FIG. 2 is a schematic diagram of channel estimation and signal recovery applicable to an embodiment of the present application.

As shown in FIG. 2, in step S210, in addition to transmitting data signals on time-frequency resources, a transmitter also transmits a series of pilot signals known to the receiver, such as channel state information reference signal (channel state information-reference signal, CSI-RS), demodulation reference signal (demodulation reference signal, DMRS), and the like.

In step S211, the transmitter transmits the above data signals and pilot signals to the transmitter via a channel.

In step S212, after receiving the pilot signals, the receiver may perform channel estimation. In a possible implementation, the receiver may estimate the channel information of a channel for transmitting the pilot signals based on a pre-stored pilot sequence and the received pilot sequence using a channel estimation algorithm (e.g., least squares method (least squares method, LS) channel estimation).

In step S213, the receiver may use an interpolation algorithm to recover the channel information on all time-frequency resources based on the channel information of the channel for transmitting the pilot sequence, for subsequent channel state information CSI feedback or data recovery.

### CSI feedback system based on AI model

In wireless communication system, a codebook-based scheme is mainly used to implement channel feature extraction and feedback. That is, after the receiver performs channel estimation, based on the channel estimation result and according to a certain optimization criterion, a precoding matrix that best matches the current channel is selected from a preset precoding codebook, and the precoding matrix index (precoding matrix index, PMI) information is fed back to the transmitter via a feedback link of the air interface for the transmitter to implement precoding. In some implementations, the receiver may also feed back the measured channel quality indication (channel quality indication, CQI) to the transmitter for the transmitter to implement adaptive modulation and coding, and the like.

FIG. 3 is a schematic diagram of a CSI feedback system based on an AI model applicable to an embodiment of the present application. As shown in FIG. 3, the entire feedback system includes an AI encoder 311 and an AI decoder 321 of an autoencoder, wherein the AI encoder 311 is deployed at a transmitter 310, and the AI decoder 321 is deployed at a receiver 320. The transmitter 310 compresses and encodes the CSI to be transmitted using the AI encoder 311 to obtain compressed CSI. The compressed CSI is then fed back to the receiver 320 via a feedback link. The receiver 320 decodes the compressed CSI using the AI decoder 321 to obtain recovered CSI. In this way, communication overheads of feeding back CSI may be saved without affecting the accuracy of CSI transmission.

In the embodiments of the present application, the AI encoder and the AI decoder are used as examples to introduce the role of the model in the CSI feedback system. Of course, in the embodiments of the present application, the model may also be used in other steps in the CSI feedback system. For example, the model may be used in the CSI feedback system for the CSI compression process. For another example, the model may be used in the CSI feedback system for the CSI decompression process. For another example, the model may be used in the CSI feedback system for estimating CSI. For another example, the model may be used in the CSI feedback system for predicting CSI.

### Positioning based on AI model

In cellular network wireless positioning, the straight-line propagation of electromagnetic waves between a network device and a terminal device is called line of sight (line of sight, LOS) wireless propagation. In some cases, due to obstruction by buildings or trees, electromagnetic wave signals cannot propagate in a straight line, which is usually called non-line of sight (non line of sight, NLOS) wireless propagation. Traditional positioning algorithms such as time difference of arrival (time difference of arrival, TDOA) and angle-of-arrival (angle-of-arrival, AOA) are all based on LOS channels and are no longer applicable in environments dominated by NLOS. In most scenarios, the number of network devices with LOS channels to the terminal device is often relatively small, causing the accuracy of traditional positioning algorithms to fail to meet the requirements of high-precision positioning. In addition, there may be some non-ideal factors in actual systems, which may lead to a decrease in positioning accuracy.

Therefore, a high-precision positioning based on an AI model is proposed for LOS/NLOS channel coexistence scenarios. Some existing research results show that, based on a large amount of channel data, using machine learning methods to train models and mine the mapping relationship between channel responses and location coordinates may solve the problem that traditional positioning algorithms cannot be applied in a LOS/NLOS channel coexistence scenario, thereby improving positioning accuracy.

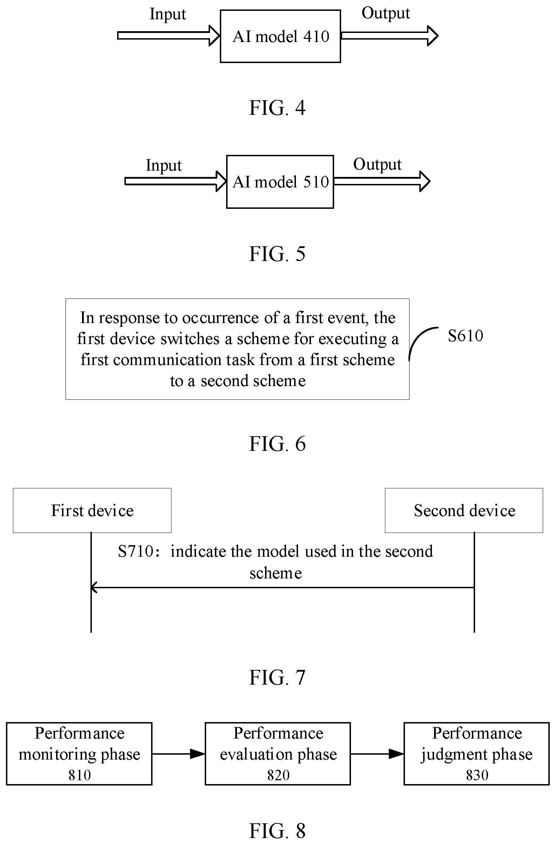

FIG. 4 shows a schematic diagram of a positioning scheme based on an AI model applicable to an embodiment of the present application. Referring to FIG. 4, in the positioning scheme implemented in a LOS/NLOS channel coexistence scenario based on an AI model 410, a channel response may be used as an input of the AI model 410, and position coordinates may be used as an output of the AI model 410. By learning an intrinsic relationship between a wireless channel and a position of a terminal device through the AI model 410, even in scenarios without sufficient LOS channels and/or scenarios affected by non-ideal conditions, the positioning scheme based on the AI model 410 may output position coordinates of the terminal device with higher accuracy, helping to meet the demand for high-precision positioning.

### Beam management based on AI model

In a traditional beam selection process, it is usually necessary to traverse all combinations of receiving beams and transmitting beams to select an appropriate beam. However, traversing all combinations takes a long time, resulting in low beam selection efficiency.

For example, assuming that a network device deploys 64 different downlink transmission directions (carried by at most 64 synchronization signal and physical broadcast channel blocks (synchronization signal and physical broadcast channel block, SSB)) in FR2, correspondingly, the terminal device uses one or more antenna panels for simultaneous receiving beam scanning during reception, and each antenna panel has 4 receiving beams. Then, the terminal device needs to measure at least 256 beam pairs, that is, a downlink resource overhead of 256 resources is required. From a time perspective, each SSB period is about 20 ms, and 4 SSB periods are required to complete the measurement of 4 receiving beams. Assuming that multiple receiving antenna panels may perform beam scanning simultaneously, at least 80 ms is required.

With an increase in a quantity of beams in future massive multiple-in multiple-out (multiple-in multiple-out, MIMO) systems, using a beam management scheme based on beam scanning to match the optimal beam pair will only result in a greater reference signal transmission overhead and beam scanning delay. Therefore, to avoid the above problem, beam management based on an AI model is proposed in R18. The following introduces the beam management scheme based on an AI model in conjunction with the training process and prediction process of the AI model, respectively.

Assuming that the AI model is used to predict available beams in a beam set A, correspondingly, in the training phase, beam measurement results of a beam set B may be used as training data for the AI model. That is, the AI model is trained based on the beam measurement results of the beam set B, so that the AI model may predict available beams from the beam set A.

It should be noted that the beam measurement results of the beam set B may include measurement results corresponding to layer 1 (layer 1, L1) measurement quantities, and/or indication information of selected beams in the beam set B (e.g., a transmitting beam identifier, a receiving beam identifier, or a beam pair identifier).

In some implementations, the training data may further include label information of the beam set A, and the label information is used to indicate one or more of the following beams in the beam set A: an optimal transmitting beam, an optimal receiving beam, an optimal beam pair, multiple better transmitting beams, multiple better receiving beams, multiple better beam pairs, or the like.

Referring to FIG. 5, in the prediction phase, the input of the AI model 510 may include link quality measurement results (e.g., L1 measurement quantity) corresponding to beams in the beam set A, and the prediction result output by the AI model 510 may include a target beam selected from the beam set A and the link quality corresponding to the target beam.

In some implementations, the foregoing target beam may be one or more beams. Taking the target beam as a single beam as an example, the target beam may be the optimal beam or a better beam in the beam set A. Taking the target beam as multiple beams as an example, the target beam may be multiple beams in the beam set A that meet requirements, where meeting requirements may be understood as the link quality corresponding to the beam meeting requirements, for example, the link quality corresponding to the beam is greater than or equal to a threshold.

In other implementations, the target beam may refer to one or more beam pairs, where each beam pair may include a receiving beam or a transmitting beam. Taking the target beam as a single beam pair as an example, the target beam may be an optimal beam pair or a better beam pair in the beam set A. Taking the target beam as multiple beam pairs as an example, the target beam may be multiple beam pairs in the beam set A that meet requirements, where meeting requirements may be understood as that the link quality corresponding to the beam pair meeting requirements. For example, the link quality corresponding to the beam pair is greater than or equal to a threshold.

It should be noted that the link quality in the embodiments of the present application may be determined by one or more measurement quantities introduced above. Of course, the link quality in the embodiments of the present application may also be determined based on other measurement quantities in future communication systems, which is not limited in the embodiments of the present application.

Additionally, the link quality being determined based on one or more measurement quantities may be understood as the link quality being obtained by processing one or more measurement quantities. Of course, the link quality may also be the measurement quantity itself. The embodiments of the present application do not limit this.

It should also be noted that if the prediction result only indicates one beam in a beam pair, the other beam in the beam pair may be determined by other methods. For example, it may be determined through one or some processes of P1 to P3 in the traditional beam selection process, or through one or some processes of U1 to U3 in the traditional beam selection process, which is not limited in the embodiments of the present application.

In some implementations, the beam set B may be a different beam set from the beam set A. In some implementations, the beam set B may be a subset of the beam set A. Correspondingly, by measuring fewer beams (beams in the beam set B), prediction for more beams (beams in the beam set A) may be achieved. Compared with the scheme of beam selection based on traversing all combinations introduced above, this helps reduce the time for performing the beam selection process. Of course, in the embodiments of the present application, the beams in the beam set B and the beams in the beam set A may be completely different beams. For example, the beam set B and the beam set A have no intersection, but the beam directions corresponding to the beam set B may be similar to the beam directions corresponding to the beam set A.

In other implementations, the beam set B may be exactly the same beam set as the beam set A.

It should be noted that the above only exemplarily introduces the communication process using a model in the embodiments of the present application. In the embodiments of the present application, the model may also be applied to other communication processes. For example, model-based beam prediction; model-based mobility management; model-based resource management; model-based modulation and demodulation.

### Model-based wireless communication solutions

With the development of artificial intelligence technology and/or machine learning technology, artificial intelligence (artificial intelligence, AI) models and/or machine learning (machine learning, ML) models have been introduced into communication systems, forming model-based wireless communication solutions. Currently, model-based wireless communication solutions can be divided into two categories: one is a single-end solution, and the other is a dual-end solution. For a single-end solution, the model-based solution is usually deployed only in one device. For example, the model-based solution may be deployed only in a terminal device. For another example, the model-based solution may be deployed only in a network device. For a dual-end solution, the terminal device and the network device usually need to cooperate with each other, meaning that models are deployed in both the terminal device and the network device. The following introduces the dual-end solution in the CSI feedback process with reference to FIG. 2.

Referring to FIG. 2, in the CSI compression process of a transmitter 210, an encoder based on an AI model (e.g., may include an AI encoder 211 or a CSI compression model) may be introduced. Correspondingly, in the CSI recovery process of a receiver 220, a decoder based on an AI model (e.g., may include an AI decoder 221 or a CSI recovery model) is introduced. That is, model-based solutions are deployed in both the transmitter 210 and the receiver 220. Therefore, this solution may also be called a "dual-end model solution". In the transmitter 210, the CSI to be transmitted may be compressed and encoded by the AI encoder 211 to obtain compressed CSI. The compressed CSI is then fed back to the receiver 220 via a feedback link. Correspondingly, the receiver 220 may decode the compressed CSI through the AI decoder 221 to obtain recovered CSI.

In some scenarios, to improve the accuracy of CSI recovery, the CSI compression model and the CSI recovery model are usually mutually matching models. For example, the CSI compression model and the CSI recovery model may be obtained through joint training. If the CSI compression model and the CSI recovery model do not match each other before, the accuracy of the CSI recovery process may decrease.

It should be noted that the above takes the CSI feedback process as an example to introduce the model-based dual-end solution. In some implementations, the model-based dual-end solution may also be applied to signal modulation or demodulation processes, source (or channel) encoding or decoding processes, and communication processes where the transmitter and receiver match each other. That is, in the dual-end solution, models are deployed at both the transmitting end and the receiving end of the communication system. Correspondingly, the model at the transmitting end and the model at the receiving end may jointly complete one or some wireless transmission functions.

Currently, communication devices usually use a first scheme to execute a first communication task. However, the performance of the first scheme is affected by many factors, and it cannot be guaranteed that the performance of the first scheme is always in a good state. If the performance of the first scheme is affected and the first scheme is still used to execute the first communication task, the execution of the first communication task may be poor, affecting the communication quality between communication devices. Therefore, during the process of using the first scheme to execute the first communication task, it is necessary to perform a performance evaluation on the first scheme to evaluate the performance of the first scheme. However, the current protocol does not specify how to perform a performance evaluation on the first scheme, which may lead to different understandings between communication devices, resulting in communication failure.

Taking the first scheme as the model-based scheme introduced above as an example, the model used in the first scheme is usually trained based on training data, so the performance of the first scheme is usually limited to the communication environment corresponding to the training data. That is, if the communication environment in which the first scheme is used is similar to the communication environment corresponding to the training data, the performance of the first scheme is usually good. If the communication environment in which the first scheme is used differs significantly from the communication environment corresponding to the training data, the performance of the first scheme is usually unstable. Therefore, during the process of using the model-based first scheme to execute the first communication task, performing a performance evaluation on the first scheme helps to avoid communication failure caused by performance degradation of the first scheme. Assuming that the communication devices participating in the execution of the first communication task include a communication device 1 and a communication device 2, since the current protocol does not specify the process of performing a performance evaluation on the first scheme, the communication device 1 may think that during the performance evaluation process, the first scheme continues to be used to perform the first communication task, while the communication device 2 may think that during the performance evaluation process, another scheme is used to perform the first communication task. This causes the communication device 1 and the communication device 2 to use different schemes to execute the first communication task, leading to the failure of the first communication task.

Therefore, to address the above problem, embodiments of the present application provide a wireless communication method. In this method, it is specified that during the performance evaluation of the first scheme, the scheme for executing the first communication task is switched from the first scheme to a second scheme, which helps unify the understanding of communication devices and reduce the probability of failure in executing the first communication task.

On the other hand, the performance evaluation of the first scheme is usually triggered by abnormal performance of the first scheme. Therefore, during the performance evaluation of the first scheme, switching to the second scheme to execute the first communication task helps avoid the failure of the first communication task due to abnormal performance of the first scheme.

In the embodiments of the present application, the first communication task is not limited. For example, the first communication task may be the CSI compression task introduced earlier. For another example, the first communication task may be the CSI decompression task introduced earlier. For another example, the first communication task may be the beam management task introduced earlier. For another example, the first communication task may be the positioning task introduced earlier.

In some scenarios, if the device executing the first communication task is a network device, the first communication task may be called a network device-side task. If the device executing the first communication task is a terminal device, the first communication task may be called a terminal device-side task.

In the embodiments of the present application, the first scheme is not limited. In some implementations, the first scheme may be a model-based solution. The model may be, for example, an AI model and/or a machine learning model. Taking the AI model as an example, the first scheme may be the beam management scheme based on an AI model introduced earlier, or the first scheme may be the positioning scheme based on an AI model introduced earlier. Of course, in the embodiments of the present application, the first scheme may also be a scheme not based on a model.

For example, the first communication task may be the CSI compression task introduced earlier. For another example, the first communication task may be the CSI decompression task introduced earlier. For another example, the first communication task may be the beam management task introduced earlier. For another example, the first communication task may be the positioning task introduced earlier.

It should be understood that in the embodiments of the present application, the communication device participating in the execution of the first communication task may be divided into a device executing the first scheme and a node monitoring the performance of the first scheme. The device executing the first scheme is also called an "execution node" or an "execution device", and the device performing performance monitoring and/or performance evaluation on the performance of the first scheme is also called a "performance monitoring/performance evaluation device" or a "performance monitoring/performance evaluation node".

In some scenarios (e.g., the dual-end solution introduced above), the model may be deployed in two devices, meaning that the execution device may include multiple devices. Taking the dual-end model deployed in a terminal device and a network device as an example, the execution device may include the terminal device and the network device. Of course, in the embodiments of the present application, the model may be deployed in one device. For example, the model may be deployed only in a terminal device or a network device.

In some scenarios, the performance monitoring/performance evaluation device may be a different device from the execution device. For example, the performance monitoring/performance evaluation device may be a network device, and the execution device may be a terminal device. For another example, the performance monitoring/performance evaluation device may be a terminal device, and the execution device may be a network device. In other scenarios, the performance monitoring/performance evaluation device may be one of the execution devices. For example, the performance monitoring/performance evaluation device may be a network device, and the execution device may include a terminal device and a network device. For another example, the performance monitoring/performance evaluation device may be a terminal device, and the execution device may include a terminal device and a network device. Of course, in the embodiments of the present application, the performance monitoring/performance evaluation device and the execution device may be the same device.

For ease of description, the execution device may be referred to as a first device below, and correspondingly, the performance monitoring/performance evaluation device may be a second device. In the embodiments of the present application, a type of the first device and/or the second device is not limited. For example, the first device may be a terminal device or a network device. For another example, the second device may be a terminal device or a network device. Taking the first device as a terminal device as an example, the second device may be a network device. Taking the second device as a network device as an example, the second device may be a terminal device. Of course, in the embodiments of the present application, the first device and the second device may both be terminal devices, or the first device and the second device may both be network devices, or the first device may be a terminal device and a network device, and correspondingly, the second device may be a network device. Or, the first device may be a terminal device and a network device, and correspondingly, the second device may be a terminal device.

The wireless communication method according to the embodiments of the present application is introduced below with reference to FIG. 6. The method shown in FIG. 6 includes step S610.

In step S610, in response to occurrence of a first event, the first device switches a scheme for executing a first communication task from a first scheme to a second scheme, where the first event includes performing a performance evaluation on performance of the first scheme.

In some scenarios, the foregoing phase of performing the performance evaluation on the performance of the first scheme may be called a "performance evaluation phase".

In some implementations, the first scheme and the second scheme may be model-based schemes, and correspondingly, generalization performance of the model used in the second scheme is higher than generalization performance of the model used in the first scheme. That is, during the phase of performing the performance evaluation on the first scheme, a scheme with higher generalization may be used to execute the first communication task. Although the performance of the second scheme is relatively poor compared to the first scheme for a specific communication environment, if the performance of the first scheme is abnormal, it is likely caused by a change in the communication environment. At this time, using the second scheme with better generalization performance to execute the first communication task helps ensure the basic communication quality of executing the first communication task.

In the embodiments of the present application, the method for obtaining the model used in the second scheme is not limited. In some implementations, the model used in the second scheme may be determined based on one or more of the following: predefined; preconfigured; indicated by the second device; or indicated by a network device.

In some implementations, referring to FIG. 7, in step S710, the second device indicating the model used in the second scheme may include the second device indicating to the first device a model identifier of the model used in the second scheme. The model corresponding to this model identifier may be predefined by the protocol or preconfigured by the first device. Of course, in the embodiments of the present application, step S710 may be understood as the second device configuring the model used in the second scheme for the first device. For example, the second device configures the model parameters and/or model structure of the model used in the second scheme for the first device.

As described above, the second scheme may be indicated by a network device, and a manner in which the network device indicates is similar to a manner in which the second device indicates, which is not be described again below. It should be understood that in the embodiments of the present application, the network device may be a performance evaluation/performance monitoring device (i.e., the second device described above), or the network device may be an execution device, or the network device may be a device other than the execution device and the performance evaluation/performance monitoring device.

In other implementations, the second scheme may be a scheme not based on a model, or in other words, the second scheme may be a traditional communication scheme. For example, the second scheme may be a traditional CSI feedback scheme. For another example, the second scheme may be a traditional encoding/decoding scheme. For another example, the second scheme may be a traditional beam management scheme. For another example, the second scheme may be a traditional positioning scheme.

In some scenarios, if the second scheme is a scheme not based on a model, the scheme for executing the first communication task may be switched from the first scheme to the second scheme, which can be understood as falling back the scheme for executing the first communication task from the first scheme to the second scheme.

Generally, a traditional scheme that is not based on a model has better generalization performance, or in other words, a scenario used by the traditional scheme that is not based on a model is relatively broad. Therefore, when the performance of the first scheme is unstable, using a traditional scheme that is not based on a model to execute the first communication task helps ensure the basic communication quality of executing the first communication task.

It should be noted that, in order to evaluate the performance of the first scheme during the performance evaluation phase, although the second scheme is used to execute the first communication task in this phase, the first scheme may still be used to execute the first communication task. However, the result of executing the first communication task using the first scheme is used for performance evaluation of the first scheme, while the result of executing the first communication task using the second scheme is used for a normal communication process. Of course, in the embodiments of the present application, the first scheme may not be used to execute the first communication task during the performance evaluation phase; instead, the performance evaluation of the first scheme may be performed based on historical results of executing the first communication task using the first scheme.

In the embodiments of the present application, a manner of determining the performance evaluation phase is not limited. The following describes a manner of determining the evaluation phase in the embodiments of the present application in conjunction with Manner 1 to Manner 3.

### Manner 1: single determination manner

That is to say, the evaluation result of the first scheme may be determined based on the evaluation result of a single determination. For example, the first scheme is used to execute the first communication task once, obtaining the evaluation result of the first scheme.

### Manner 2: multiple determination manner

That is to say, the evaluation result of the first scheme may be determined based on the evaluation results of multiple determinations. For example, the first scheme is used to execute the first communication task multiple times, obtaining the evaluation result of the first scheme.

In some implementations, the above multiple determinations may be consecutive multiple determinations in time. In this case, the multiple determination manner may also be referred to as "consecutive multiple determinations", which helps improve the accuracy of evaluating the performance of the first scheme. Of course, in the embodiments of the present application, the multiple determination manner may be non-consecutive multiple determinations in time, which helps improve the flexibility of the multiple determinations.

For example, a quantity of times the first scheme is used to execute the first communication task is M1, and if the performance of the first scheme obtained from the M1 determinations is all abnormal, then the evaluation result of the first scheme is determined to be abnormal, where M1 is a positive integer greater than or equal to 1.

For another example, a quantity of times the first scheme is used to execute the first communication task is M1, and if among the M1 determinations, the evaluation results of the first scheme obtained from N1 consecutive determinations are all abnormal, then the evaluation result of the first scheme is determined to be abnormal, where N1 is a positive integer less than or equal to M1, and both N1 and M1 are positive integers greater than or equal to 1.

In the embodiments of the present application, values of M1 and/or N1 are not limited. For example, a value of M1 or N1 may be one of following: 2, 4, 5, 8, 10, 15, 16, 20, 32, 40, 50, 80, 128, 160, 200, 500, or 1000.

### Manner 3: determination manner based on a first time period

That is to say, the evaluation result of the first scheme may be obtained based on performance evaluation of the first scheme within a first time period. For example, within the first time period, performance evaluations of the first scheme may be performed once or multiple times. If the results of one or more determinations are all performance abnormalities, then the evaluation result of the first scheme is determined to be abnormal.

In the embodiments of the present application, an implementation manner of the first time period is not limited. In some implementations, the first time period may be represented by a time window. In some scenarios, this time window is also referred to as an "evaluation window".

In the embodiments of the present application, a length of the first time period is not limited. In some implementations, the length of the first time period may be L1 time domain units, where L1 may be a positive integer greater than or equal to 1. Additionally, the time domain unit may be one or more of a slot, a symbol, or a subframe. Of course, in the embodiments of the present application, the time domain unit may also be another time domain unit introduced in future communication systems. In other implementations, the length of the first time period may be L2 time units, where L2 may be a positive integer greater than or equal to 1. Additionally, a unit of the time unit may be milliseconds, seconds, minutes, or the like.

It should be noted that the various parameters (for example, one or more of information such as a value of M1, a value of N1, an interval time between M1 determinations, a length of the first time period, or a quantity of first time periods) described above in conjunction with Manner 1 to Manner 3 may be predefined, preconfigured, or configured by the network device.

For example, when the first device is a terminal device, the network device may configure the above parameters for the terminal device. In the embodiments of the present application, the network device may configure the above parameters for the terminal device in a manner of downlink control information (downlink control information, DCI), medium access control control element (media access control control element, MAC CE), radio resource control (radio resource control, RRC) signaling, RRC reconfiguration message, system broadcast, master information block (master information block, MIB), system information block 1 (system information block1, SIB1), SIB, or the like.

The above describes a manner of determining the performance evaluation phase in the embodiments of the present application. The following describes the execution scheme of the first communication task determined based on the evaluation result in the embodiments of the present application. In some scenarios, the phase of determining the execution scheme of the first communication task based on the evaluation result may be referred to as the "performance confirmation phase".

In some implementations, if the evaluation result indicates an abnormality, the first device may use a third scheme to execute the first communication task, where the third scheme is different from the first scheme. That is to say, the above method further includes: in response to an abnormal evaluation result of the performance evaluation, executing, by the first device, the first communication task based on the third scheme.

In some implementations, the third scheme may be a model-based scheme. For example, the model used by the first scheme may be different from the model used by the third scheme. For another example, the communication environment to which the model used by the first scheme is applicable may be different from the communication environment of the model used by the third scheme. For another example, the communication environment corresponding to the training data of the model used by the first scheme may be different from the communication environment corresponding to the training data of the model used by the third scheme.

In other implementations, if the evaluation result indicates normal, the first device may continue to use the first scheme to execute the first communication task. That is to say, the above method further includes: in response to a normal evaluation result of the performance evaluation, executing, by the first device, the first communication task using the first scheme.

In the embodiments of the present application, a manner for the first device to obtain the evaluation result is not limited. In some implementations, the evaluation result of the first scheme may be determined by the second device. Accordingly, the second device may transmit the evaluation result to the first device via third indication information. That is to say, the above method further includes: receiving, by the first device, third indication information transmitted by a second device, where the third indication information is used to indicate whether the evaluation result of the performance evaluation is abnormal. In other implementations, the evaluation result of the first scheme may be determined autonomously by the first device.

It should be noted that, regardless of whether the evaluation result is determined by the first device or the second device, a manner for obtaining the evaluation result may be based on the determination manners described above in conjunction with Manner 1 to Manner 3. Of course, in the embodiments of the present application, another manner may also be used to determine the evaluation result.

The above describes the performance evaluation phase of the embodiments of the present application. The following describes a triggering manner for the performance evaluation phase in the embodiments of the present application. In some implementations, the first event is triggered based on one or more of the following: abnormal performance of the first scheme; or first indication information transmitted by the second device, where the first indication information is used to trigger performance evaluation of the performance of the first scheme. Of course, in the embodiments of the present application, the first event may also be triggered periodically, or the first event may be triggered based on a change in the communication environment.

In some scenarios, a phase of determining the abnormal performance of the first scheme may be referred to as a "performance monitoring phase". That is to say, the performance monitoring phase is a phase before the performance evaluation phase, and the monitoring result of the performance monitoring phase is used to trigger the performance evaluation phase. Accordingly, the abnormal performance of the first scheme may be understood as an abnormal monitoring result of the first scheme. This will be described below in conjunction with FIG. 7.

In some scenarios, the above abnormal performance of the first scheme and/or the first indication information may be understood as a condition for triggering a first event. That is to say, the first event may be triggered by a first condition. Accordingly, the first condition may include abnormal performance of the first scheme and/or reception of the first indication information.

In some implementations, the abnormal performance of the first scheme may include poor performance of the first scheme. For example, the abnormal performance of the first scheme may include the performance of the first scheme being lower than a threshold 1, where threshold 1 may be determined based on one or more of the following: predefined, preconfigured, or configured by the second device. The judgment condition for abnormal performance will be described below in conjunction with the parameters used for evaluating performance.

In other implementations, the abnormal performance of the first scheme may be understood as unstable performance of the first scheme over a period of time. In the embodiments of the present application, a manner for determining unstable performance of the first scheme is not specifically limited. For example, the unstable performance of the first scheme may be determined based on a mean value of the performance of the first scheme over a period of time. For another example, the unstable performance of the first scheme may be determined based on a variation amplitude of the performance of the first scheme over a period of time.

It should be noted that if the first event is triggered by the abnormal performance of the first scheme, the abnormal performance of the first scheme may be determined autonomously by the first device.

In some implementations, the first event may be triggered by the second device via the first indication information. In other words, the first indication information is used to indicate performance evaluation of the first scheme, or the first indication information is used to indicate entering the performance evaluation phase for the first scheme. Alternatively, the first indication information is used to configure the first device to enter the performance evaluation phase for the first scheme. For example, if the second device detects abnormal performance of the first scheme, the second device may send the first indication information to the first device to indicate performance evaluation on the performance of the first scheme.

In some scenarios, the first indication information is used for the first device to enter the performance evaluation phase for the first scheme, which may be understood as the first indication information being used to configure the parameters required for the first device to enter the performance evaluation phase. For example, the first indication information is used to configure the duration of the performance evaluation phase for the first device (e.g., the evaluation window described above). For another example, the first indication information is used to configure a second scheme used by the first device during the performance evaluation phase.

It should be noted that if the first event is triggered by the abnormal performance of the first scheme, the abnormal performance of the first scheme may be determined autonomously by the first device. If the first event is triggered by the first indication information, the second device may determine whether to trigger the first indication information based on whether the performance of the first scheme is abnormal. Of course, in the embodiments of the present application, the first indication information may be triggered periodically, or the first indication information may be triggered based on a change in the communication environment.

The following describes the determination manner for obtaining the monitoring result in the embodiments of the present application in conjunction with Manner 1 to Manner 3. It should be understood that the determination manner described below may be applicable to a scenario of autonomous determination by the first device, and may also be applicable to a scenario of determination by the second device.

### Manner 1: single determination manner

That is to say, the abnormal performance of the first scheme may be determined based on the result of a single determination. For example, the first scheme is used to execute the first communication task once, obtaining the performance of the first scheme, and the monitoring result of the first scheme is determined based on the performance of the first scheme.

### Manner 2: multiple determination manner

That is to say, the abnormal performance of the first scheme may be determined based on the results of multiple determinations. For example, the first scheme is used to execute the first communication task multiple times, obtaining the performance of each execution of the first communication task using the first scheme, and a monitoring result is determined based on this performance.

In some implementations, the above multiple determinations may be consecutive multiple determinations in time. In this case, the multiple determination manner may also be referred to as "consecutive multiple determinations", which helps improve the accuracy of the monitoring result. Of course, in the embodiments of the present application, the multiple determination manner may be non-consecutive multiple determinations in time.

For example, a quantity of times the first scheme is used to execute the first communication task is M2, and if the performance of the first scheme obtained from the M2 determinations is all abnormal, then the monitoring result of the first scheme is determined to be abnormal, where M2 is a positive integer greater than or equal to 1.

For another example, a quantity of times the first scheme is used to execute the first communication task is M2, and if among the M2 determinations, the performance of the first scheme obtained from N2 consecutive determinations is all abnormal, then the monitoring result of the first scheme is determined to be abnormal, where N1 is a positive integer less than or equal to M1, and both N2 and M2 are positive integers greater than or equal to 1.

In the embodiments of the present application, values of M2 and/or N2 are not limited. For example, a value of M2 or N2 may be one of following: 2, 4, 5, 8, 10, 15, 16, 20, 32, 40, 50, 80, 128, 160, 200, 500, or 1000.

### Manner 3: determination manner based on a second time period

That is to say, the abnormal performance of the first scheme may be determined based on monitoring the performance of the first scheme within a second time period. For example, within the second time period, determinations of the performance of the first scheme may be performed once or multiple times. If the results of one or more determinations are all performance abnormalities, then the monitoring result of the first scheme is determined to be abnormal.

In the embodiments of the present application, an implementation manner of the second time period is not limited. In some implementations, the second time period may be represented by a time window. In some scenarios, this time window is also referred to as a "monitoring window".

In the embodiments of the present application, a length of the second time period is not limited. In some implementations, the length of the second time period may be L3 time domain units, where L3 may be a positive integer greater than or equal to 1. Additionally, the time domain unit may be one or more of a slot, a symbol, or a subframe. Of course, in the embodiments of the present application, the time domain unit may also be another time domain unit introduced in future communication systems. In other implementations, the length of the second time period may be L4 time units, where L4 may be a positive integer greater than or equal to 1. Additionally, a unit of the time unit may be milliseconds, seconds, minutes, or the like.

It should be noted that the various parameters (e.g., one or more of information such as a value of M2, a value of N2, an interval time between M2 determinations, a length of the second time period, or a quantity of second time periods) described above in conjunction with Manner 1 to Manner 3 may be predefined, preconfigured, or configured by the network device.

For example, when the first device is a terminal device, the network device may configure the above parameters for the terminal device. In the embodiments of the present application, the network device may configure the above parameters for the terminal device in a manner of DCI, MAC CE, RRC signaling, RRC reconfiguration message, system broadcast, MIB, SIB1, SIB, or the like.

In some scenarios, after determining that the performance of the first scheme is abnormal through the above determination manners, the first scheme may enter the performance evaluation phase. Therefore, a process of obtaining the result through the above determination manner may be understood as a start time of the performance evaluation phase. This will be described below in conjunction with FIG. 8.

In the embodiments of the present application, a manner for the first device to obtain the evaluation result is not limited. In some implementations, the evaluation result of the first scheme may be determined by the second device. Accordingly, the second device may transmit the monitoring result to the first device via second indication information. That is to say, the above method further includes: receiving, by the first device, second indication information transmitted by a second device, where the second indication information is used to indicate whether the monitoring result of the performance monitoring is abnormal. In other implementations, the monitoring result of the first scheme may be determined autonomously by the first device.

It should be noted that, regardless of whether the monitoring result is determined by the first device or the second device, the manner for obtaining the monitoring result may be based on the determination manners described above in conjunction with Manner 1 to Manner 3. Of course, in the embodiments of the present application, another manner may also be used to determine the monitoring result.

The above respectively describes the determination manners for the performance monitoring process and the performance evaluation process in the embodiments of the present application. The following describes the judgment conditions for the monitoring result and the judgment conditions for the evaluation result in the embodiments of the present application. Generally, if different parameters are used to evaluate the performance of the first scheme, the judgment conditions for the first scheme will differ slightly.

In some implementations, the performance of the first scheme may be determined by one or more of the following parameters: spectral efficiency after using the first scheme; system throughput after using the first scheme; block error rate (block error rate, BLER) after using the first scheme; or a difference between the output of the first scheme and the expected output, where the difference between the output of the first scheme and the expected output may be determined by one or more of a square of generalized cosine similarity (square of generalized cosine similarity, SGCS), generalized cosine similarity (generalized cosine similarity, GCS), mean square error (mean-square error, MSE), or normalized mean square error (normalized mean square error, NMSE).

Taking the performance of the first scheme being determined by the spectral efficiency after using the first scheme as an example, the judgment conditions for the monitoring result and/or evaluation result of the first scheme are introduced. In some implementations, the monitoring result and/or evaluation result of the first scheme being normal may be determined based on one or more of the following: spectral efficiency after using the first scheme is higher than a threshold 1; a probability that the spectral efficiency after using the first scheme is higher than the target spectral efficiency is higher than a threshold 2; or spectral efficiency after using the first scheme is higher than the target spectral efficiency, and a difference between the spectral efficiency after using the first scheme and the target spectral efficiency is greater than a threshold 3.

In other implementations, the monitoring result and/or evaluation result of the first scheme being abnormal may be determined based on one or more of the following: spectral efficiency after using the first scheme is lower than a threshold 1; a probability that the spectral efficiency after using the first scheme is lower than the target spectral efficiency is higher than a threshold 2; or spectral efficiency after using the first scheme is higher than the target spectral efficiency, and a difference between the spectral efficiency after using the first scheme and the target spectral efficiency is less than a threshold 3.

It should be noted that, as described above, the thresholds (e.g., thresholds 1 to 3) used for judging the monitoring result and/or evaluation result may be the same. Of course, in the embodiments of the present application, the thresholds (e.g., thresholds 1 to 3) used for judging the monitoring result and/or evaluation result may be different.

Additionally, the thresholds used for judging the monitoring result and/or evaluation result as normal may be the same as the thresholds used for judging the monitoring result and/or evaluation result as abnormal, which helps simplify a manner of configuring thresholds. Of course, in the embodiments of the present application, the thresholds used for judging the monitoring result and/or evaluation result as normal may be different from the thresholds used for judging the monitoring result and/or evaluation result as abnormal, which helps improve the flexibility of configuring thresholds.

Taking the performance of the first scheme being determined by the system throughput after using the first scheme as an example, the judgment conditions for the monitoring result and/or evaluation result of the first scheme are introduced. In some implementations, the monitoring result and/or evaluation result of the first scheme being normal may be determined based on one or more of the following: system throughput after using the first scheme is higher than a threshold 1; a probability that the system throughput after using the first scheme is higher than the target system throughput is higher than a threshold 2; or system throughput after using the first scheme is higher than the target system throughput, and a difference between the system throughput after using the first scheme and the target system throughput is greater than a threshold 3.

In other implementations, the monitoring result and/or evaluation result of the first scheme being abnormal may be determined based on one or more of the following: system throughput after using the first scheme is lower than a threshold 1; a probability that the system throughput after using the first scheme is lower than the target system throughput is higher than a threshold 2; or system throughput after using the first scheme is higher than the target system throughput, and a difference between the system throughput after using the first scheme and the target system throughput is less than a threshold 3.

It should be noted that, as described above, the thresholds (e.g., thresholds 1 to 3) used for judging the monitoring result and/or evaluation result may be the same. Of course, in the embodiments of the present application, the thresholds (e.g., thresholds 1 to 3) used for judging the monitoring result and/or evaluation result may be different.

Additionally, the thresholds used for judging the monitoring result and/or evaluation result as normal may be the same as the thresholds used for judging the monitoring result and/or evaluation result as abnormal, which helps simplify a manner of configuring thresholds. Of course, in the embodiments of the present application, the thresholds used for judging the monitoring result and/or evaluation result as normal may be different from the thresholds used for judging the monitoring result and/or evaluation result as abnormal, which helps improve the flexibility of configuring thresholds.

Taking the performance of the first scheme being determined by the block error rate after using the first scheme as an example, the judgment conditions for the monitoring result and/or evaluation result of the first scheme are introduced. In some implementations, the monitoring result and/or evaluation result of the first scheme being normal may be determined based on one or more of the following: a block error rate after using the first scheme is higher than a threshold 1; a probability that a block error rate after using the first scheme is higher than a target block error rate is higher than a threshold 2; or a block error rate after using the first scheme is higher than a target block error rate, and a difference between the block error rate after using the first scheme and the target block error rate is greater than a threshold 3.

In other implementations, the monitoring result and/or evaluation result of the first scheme being abnormal may be determined based on one or more of the following: a block error rate after using the first scheme is lower than a threshold 1; a probability that the block error rate after using the first scheme is lower than a target block error rate is higher than a threshold 2; or a block error rate after using the first scheme is higher than a target block error rate, and a difference between the block error rate after using the first scheme and the target block error rate is less than a threshold 3.

It should be noted that, as described above, the thresholds (e.g., thresholds 1 to 3) used for judging the monitoring result and/or evaluation result may be the same. Of course, in the embodiments of the present application, the thresholds (e.g., thresholds 1 to 3) used for judging the monitoring result and/or evaluation result may be different.

Additionally, the thresholds used for judging the monitoring result and/or evaluation result as normal may be the same as the thresholds used for judging the monitoring result and/or evaluation result as abnormal, which helps simplify a manner of configuring thresholds. Of course, in the embodiments of the present application, the thresholds used for judging the monitoring result and/or evaluation result as normal may be different from the thresholds used for judging the monitoring result and/or evaluation result as abnormal, which helps improve the flexibility of configuring thresholds.

Taking the difference between the output result of the first scheme and the expected result being represented by the SGCS corresponding to the first scheme as an example, the judgment conditions for the monitoring result and/or evaluation result of the first scheme are introduced. In some implementations, the monitoring result and/or evaluation result of the first scheme being normal may be determined based on one or more of the following: an SGCS corresponding to the first scheme is higher than a threshold 1; a probability that an SGCS corresponding to the first scheme is higher than a target SGCS is higher than a threshold 2; or an SGCS corresponding to the first scheme is higher than a target SGCS, and a difference between the SGCS corresponding to the first scheme and the target SGCS is greater than a threshold 3.

In other implementations, the monitoring result and/or evaluation result of the first scheme being abnormal may be determined based on one or more of the following: an SGCS corresponding to the first scheme is lower than a threshold 1; a probability that an SGCS corresponding to the first scheme is lower than a target SGCS is higher than a threshold 2; or an SGCS corresponding to the first scheme is higher than a target SGCS, and a difference between the SGCS corresponding to the first scheme and the target SGCS is less than a threshold 3.

It should be noted that, as described above, the thresholds (e.g., thresholds 1 to 3) used for judging the monitoring result and/or evaluation result may be the same. Of course, in the embodiments of the present application, the thresholds (e.g., thresholds 1 to 3) used for judging the monitoring result and/or evaluation result may be different.

Additionally, the thresholds used for judging the monitoring result and/or evaluation result as normal may be the same as the thresholds used for judging the monitoring result and/or evaluation result as abnormal, which helps simplify a manner of configuring thresholds. Of course, in the embodiments of the present application, the thresholds used for judging the monitoring result and/or evaluation result as normal may be different from the thresholds used for judging the monitoring result and/or evaluation result as abnormal, which helps improve the flexibility of configuring thresholds.

Taking the difference between the output result of the first scheme and the expected result being determined by the GCS corresponding to the first scheme as an example, the judgment conditions for the monitoring result and/or evaluation result of the first scheme are introduced. In some implementations, the monitoring result and/or evaluation result of the first scheme being normal may be determined based on one or more of the following: a GCS corresponding to the first scheme is higher than a threshold 1; a probability that a GCS corresponding to the first scheme is higher than a target GCS is higher than a threshold 2; or a GCS corresponding to the first scheme is higher than a target GCS, and a difference between the GCS corresponding to the first scheme and the target GCS is greater than a threshold 3.

In other implementations, the monitoring result and/or evaluation result of the first scheme being abnormal may be determined based on one or more of the following: a GCS corresponding to the first scheme is lower than a threshold 1; a probability that the GCS corresponding to the first scheme is lower than a target GCS is higher than a threshold 2; or a GCS corresponding to the first scheme is higher than a target GCS, and a difference between the GCS corresponding to the first scheme and the target GCS is less than a threshold 3.

It should be noted that, as described above, the thresholds (e.g., thresholds 1 to 3) used for judging the monitoring result and/or evaluation result may be the same. Of course, in the embodiments of the present application, the thresholds (e.g., thresholds 1 to 3) used for judging the monitoring result and/or evaluation result may be different.

Additionally, the thresholds used for judging the monitoring result and/or evaluation result as normal may be the same as the thresholds used for judging the monitoring result and/or evaluation result as abnormal, which helps simplify a manner of configuring thresholds. Of course, in the embodiments of the present application, the thresholds used for judging the monitoring result and/or evaluation result as normal may be different from the thresholds used for judging the monitoring result and/or evaluation result as abnormal, which helps improve the flexibility of configuring thresholds.

Taking the difference between the output result of the first scheme and the expected result being determined by the MSE corresponding to the first scheme as an example, the judgment conditions for the monitoring result and/or evaluation result of the first scheme are introduced. In some implementations, the monitoring result and/or evaluation result of the first scheme being normal may be determined based on one or more of the following: an MSE corresponding to the first scheme is higher than a threshold 1; a probability that an MSE corresponding to the first scheme is higher than a target MSE is higher than a threshold 2; or an MSE corresponding to the first scheme is higher than a target MSE, and a difference between the MSE corresponding to the first scheme and the target MSE is greater than a threshold 3.

In other implementations, the monitoring result and/or evaluation result of the first scheme being abnormal may be determined based on one or more of the following: an MSE corresponding to the first scheme is lower than a threshold 1; a probability that an MSE corresponding to the first scheme is lower than a target MSE is higher than a threshold 2; or an MSE corresponding to the first scheme is higher than a target MSE, and a difference between the MSE corresponding to the first scheme and the target MSE is less than a threshold 3.

It should be noted that, as described above, the thresholds (e.g., thresholds 1 to 3) used for judging the monitoring result and/or evaluation result may be the same. Of course, in the embodiments of the present application, the thresholds (e.g., thresholds 1 to 3) used for judging the monitoring result and/or evaluation result may be different.

Additionally, the thresholds used for judging the monitoring result and/or evaluation result as normal may be the same as the thresholds used for judging the monitoring result and/or evaluation result as abnormal, which helps simplify a manner of configuring thresholds. Of course, in the embodiments of the present application, the thresholds used for judging the monitoring result and/or evaluation result as normal may be different from the thresholds used for judging the monitoring result and/or evaluation result as abnormal, which helps improve the flexibility of configuring thresholds.

Taking the difference between the output result of the first scheme and the expected result being determined by the NMSE corresponding to the first scheme as an example, the judgment conditions for the monitoring result and/or evaluation result of the first scheme are introduced. In some implementations, the monitoring result and/or evaluation result of the first scheme being normal may be determined based on one or more of the following: an NMSE corresponding to the first scheme is higher than a threshold 1; a probability that an NMSE corresponding to the first scheme is higher than a target NMSE is higher than a threshold 2; or an NMSE corresponding to the first scheme is higher than a target NMSE, and a difference between the NMSE corresponding to the first scheme and the target NMSE is greater than a threshold 3.

In other implementations, the monitoring result and/or evaluation result of the first scheme being abnormal may be determined based on one or more of the following: an NMSE corresponding to the first scheme is lower than a threshold 1; a probability that the NMSE corresponding to the first scheme is lower than the target NMSE is higher than a threshold 2; or the NMSE corresponding to the first scheme is higher than the target NMSE, and a difference between the NMSE corresponding to the first scheme and the target NMSE is less than a threshold 3.

It should be noted that, as described above, the thresholds (e.g., thresholds 1 to 3) used for judging the monitoring result and/or evaluation result may be the same. Of course, in the embodiments of the present application, the thresholds (e.g., thresholds 1 to 3) used for judging the monitoring result and/or evaluation result may be different.

Additionally, the thresholds used for judging the monitoring result and/or evaluation result as normal may be the same as the thresholds used for judging the monitoring result and/or evaluation result as abnormal, which helps simplify a manner of configuring thresholds. Of course, in the embodiments of the present application, the thresholds used for judging the monitoring result and/or evaluation result as normal may be different from the thresholds used for judging the monitoring result and/or evaluation result as abnormal, which helps improve the flexibility of configuring thresholds.

The above describes the performance monitoring phase and/or performance evaluation result in the embodiments of the present application. The following uses examples 1 to 6 as examples, combined with a function of the first scheme, to introduce the monitoring result and/or evaluation result of the embodiments of the present application.

### Example 1: the first scheme is used for compressing CSI

After recovering the CSI compressed based on the first scheme, a recovered CSI is obtained. If the recovered CSI and the expected CSI satisfy condition 1, then the monitoring result and/or evaluation result of the first scheme is determined to be abnormal, where condition 1 includes one or more of the following: an SGCS corresponding to the first scheme is lower than an SGCS threshold; a GCS corresponding to the first scheme is lower than a GCS threshold; an MSE corresponding to the first scheme is lower than an MSE threshold; an NMSE corresponding to the first scheme is lower than an NMSE threshold; a probability that an SGCS corresponding to the first scheme is higher than a target SGCS is lower than a probability threshold; a probability that a GCS corresponding to the first scheme is higher than a target GCS is lower than a probability threshold; a probability that an MSE corresponding to the first scheme is higher than a target MSE is lower than a probability threshold; a probability that an NMSE corresponding to the first scheme is higher than a target NMSE is lower than a probability threshold; an SGCS corresponding to the first scheme is higher than a target SGCS, and a difference between the SGCS corresponding to the first scheme and the target SGCS is lower than an SGCS threshold; a GCS corresponding to the first scheme is higher than a target GCS, and a difference between the GCS corresponding to the first scheme and the target GCS is lower than a GCS threshold; an MSE corresponding to the first scheme is higher than the target MSE, and a difference between the MSE corresponding to the first scheme and the target MSE is lower than an MSE threshold; or an NMSE corresponding to the first scheme is higher than a target NMSE, and a difference between the NMSE corresponding to the first scheme and the target NMSE is lower than an NMSE threshold.

Conversely, if the recovered CSI and the expected CSI satisfy condition 2, then the monitoring result and/or evaluation result of the first scheme is determined to be normal, where condition 2 includes one or more of the following: an SGCS corresponding to the first scheme is higher than an SGCS threshold; a GCS corresponding to the first scheme is higher than a GCS threshold; an MSE corresponding to the first scheme is higher than an MSE threshold; an NMSE corresponding to the first scheme is higher than an NMSE threshold; a probability that an SGCS corresponding to the first scheme is higher than a target SGCS is higher than a probability threshold; a probability that a GCS corresponding to the first scheme is higher than a target GCS is higher than a probability threshold; a probability that an MSE corresponding to the first scheme is higher than a target MSE is higher than a probability threshold; a probability that an NMSE corresponding to the first scheme is higher than a target NMSE is higher than a probability threshold; an SGCS corresponding to the first scheme is higher than a target SGCS, and a difference between the SGCS corresponding to the first scheme and the target SGCS is higher than an SGCS threshold; a GCS corresponding to the first scheme is higher than a target GCS, and a difference between the GCS corresponding to the first scheme and the target GCS is higher than a GCS threshold; an MSE corresponding to the first scheme is higher than a target MSE, and a difference between the MSE corresponding to the first scheme and the target MSE is higher than an MSE threshold; or an NMSE corresponding to the first scheme is higher than a target NMSE, and a difference between the NMSE corresponding to the first scheme and the target NMSE is higher than an NMSE threshold.

In some implementations, the expected CSI may be input information of the first scheme. Alternatively, the expected CSI may be label information corresponding to the model used by the first scheme. The embodiments of the present application do not limit the expected CSI.

### Example 2: the first scheme is used for recovering CSI

Using the first scheme to recover compressed CSI to obtain a recovered CSI, if the recovered CSI and the expected CSI satisfy condition 1, then the monitoring result and/or evaluation result of the first scheme is determined to be abnormal, where condition 1 includes one or more of the following: an SGCS corresponding to the first scheme is lower than an SGCS threshold; a GCS corresponding to the first scheme is lower than a GCS threshold; an MSE corresponding to the first scheme is lower than an MSE threshold; an NMSE corresponding to the first scheme is lower than an NMSE threshold; a probability that an SGCS corresponding to the first scheme is higher than a target SGCS is lower than a probability threshold; a probability that a GCS corresponding to the first scheme is higher than a target GCS is lower than a probability threshold; a probability that an MSE corresponding to the first scheme is higher than a target MSE is lower than a probability threshold; a probability that an NMSE corresponding to the first scheme is higher than a target NMSE is lower than a probability threshold; an SGCS corresponding to the first scheme is higher than a target SGCS, and a difference between the SGCS corresponding to the first scheme and the target SGCS is lower than an SGCS threshold; a GCS corresponding to the first scheme is higher than a target GCS, and a difference between the GCS corresponding to the first scheme and the target GCS is lower than a GCS threshold; an MSE corresponding to the first scheme is higher than a target MSE, and a difference between the MSE corresponding to the first scheme and the target MSE is lower than an MSE threshold; or an NMSE corresponding to the first scheme is higher than a target NMSE, and a difference between the NMSE corresponding to the first scheme and the target NMSE is lower than an NMSE threshold.

Conversely, if the recovered CSI and the expected CSI satisfy condition 2, then the monitoring result and/or evaluation result of the first scheme is determined to be normal, where condition 2 includes one or more of the following: an SGCS corresponding to the first scheme is higher than an SGCS threshold; a GCS corresponding to the first scheme is higher than a GCS threshold; an MSE corresponding to the first scheme is higher than an MSE threshold; an NMSE corresponding to the first scheme is higher than an NMSE threshold; a probability that an SGCS corresponding to the first scheme is higher than a target SGCS is higher than a probability threshold; a probability that a GCS corresponding to the first scheme is higher than a target GCS is higher than a probability threshold; a probability that an MSE corresponding to the first scheme is higher than a target MSE is higher than a probability threshold; a probability that an NMSE corresponding to the first scheme is higher than a target NMSE is higher than a probability threshold; an SGCS corresponding to the first scheme is higher than a target SGCS, and a difference between the SGCS corresponding to the first scheme and the target SGCS is higher than an SGCS threshold; a GCS corresponding to the first scheme is higher than a target GCS, and a difference between the GCS corresponding to the first scheme and the target GCS is higher than a GCS threshold; an MSE corresponding to the first scheme is higher than a target MSE, and a difference between the MSE corresponding to the first scheme and the target MSE is higher than an MSE threshold; or an NMSE corresponding to the first scheme is higher than a target NMSE, and a difference between the NMSE corresponding to the first scheme and the target NMSE is higher than an NMSE threshold.

In some implementations, the expected CSI may be input information of the first scheme. Alternatively, the expected CSI may be label information corresponding to the model used by the first scheme. The embodiments of this application do not limit the expected CSI.

### Example 3: the first scheme is used for CSI recovery

Using the first scheme to predict CSI to obtain predicted CSI. If the predicted CSI and the expected CSI satisfy condition 1, then the monitoring result and/or evaluation result of the first scheme is determined to be abnormal, where condition 1 includes one or more of the following: an SGCS corresponding to the first scheme is lower than an SGCS threshold; a GCS corresponding to the first scheme is lower than a GCS threshold; an MSE corresponding to the first scheme is lower than an MSE threshold; an NMSE corresponding to the first scheme is lower than an NMSE threshold; a probability that an SGCS corresponding to the first scheme is higher than a target SGCS is lower than a probability threshold; a probability that a GCS corresponding to the first scheme is higher than a target GCS is lower than a probability threshold; a probability that an MSE corresponding to the first scheme is higher than a target MSE is lower than a probability threshold; a probability that an NMSE corresponding to the first scheme is higher than a target NMSE is lower than a probability threshold; an SGCS corresponding to the first scheme is higher than a target SGCS, and a difference between the SGCS corresponding to the first scheme and the target SGCS is lower than an SGCS threshold; a GCS corresponding to the first scheme is higher than a target GCS, and a difference between the GCS corresponding to the first scheme and the target GCS is lower than a GCS threshold; an MSE corresponding to the first scheme is higher than a target MSE, and a difference between the MSE corresponding to the first scheme and the target MSE is lower than an MSE threshold; or an NMSE corresponding to the first scheme is higher than a target NMSE, and a difference between the NMSE corresponding to the first scheme and the target NMSE is lower than an NMSE threshold.

Conversely, if the recovered CSI and the expected CSI satisfy condition 2, then the monitoring result and/or evaluation result of the first scheme is determined to be normal, where condition 2 includes one or more of the following: an SGCS corresponding to the first scheme is higher than an SGCS threshold; a GCS corresponding to the first scheme is higher than a GCS threshold; an MSE corresponding to the first scheme is higher than an MSE threshold; an NMSE corresponding to the first scheme is higher than an NMSE threshold; a probability that an SGCS corresponding to the first scheme is higher than a target SGCS is higher than a probability threshold; a probability that a GCS corresponding to the first scheme is higher than a target GCS is higher than a probability threshold; a probability that an MSE corresponding to the first scheme is higher than a target MSE is higher than a probability threshold; a probability that an NMSE corresponding to the first scheme is higher than a target NMSE is higher than a probability threshold; an SGCS corresponding to the first scheme is higher than a target SGCS, and a difference between the SGCS corresponding to the first scheme and the target SGCS is higher than an SGCS threshold; a GCS corresponding to the first scheme is higher than a target GCS, and a difference between the GCS corresponding to the first scheme and the target GCS is higher than a GCS threshold; an MSE corresponding to the first scheme is higher than a target MSE, and a difference between the MSE corresponding to the first scheme and the target MSE is higher than an MSE threshold; or an NMSE corresponding to the first scheme is higher than a target NMSE, and a difference between the NMSE corresponding to the first scheme and the target NMSE is higher than an NMSE threshold.

In some implementations, the expected CSI may be input information of the first scheme. Alternatively, the expected CSI may be label information corresponding to the model used by the first scheme. The embodiments of this application do not limit the expected CSI.

### Example 4: the first scheme is used for channel estimation

Using the first scheme to perform channel estimation to obtain estimated CSI. If the estimated CSI and the expected CSI satisfy condition 1, then the monitoring result and/or evaluation result of the first scheme is determined to be abnormal, where condition 1 includes one or more of the following: an SGCS corresponding to the first scheme is lower than an SGCS threshold; a GCS corresponding to the first scheme is lower than a GCS threshold; an MSE corresponding to the first scheme is lower than an MSE threshold; an NMSE corresponding to the first scheme is lower than an NMSE threshold; a probability that an SGCS corresponding to the first scheme is higher than a target SGCS is lower than a probability threshold; a probability that a GCS corresponding to the first scheme is higher than a target GCS is lower than a probability threshold; a probability that an MSE corresponding to the first scheme is higher than a target MSE is lower than a probability threshold; a probability that an NMSE corresponding to the first scheme is higher than a target NMSE is lower than a probability threshold; an SGCS corresponding to the first scheme is higher than a target SGCS, and a difference between the SGCS corresponding to the first scheme and the target SGCS is lower than an SGCS threshold; a GCS corresponding to the first scheme is higher than a target GCS, and a difference between the GCS corresponding to the first scheme and the target GCS is lower than a GCS threshold; an MSE corresponding to the first scheme is higher than a target MSE, and a difference between the MSE corresponding to the first scheme and the target MSE is lower than an MSE threshold; or an NMSE corresponding to the first scheme is higher than a target NMSE, and a difference between the NMSE corresponding to the first scheme and the target NMSE is lower than an NMSE threshold.

Conversely, if the estimated CSI and the expected CSI satisfy condition 2, then the monitoring result and/or evaluation result of the first scheme is determined to be normal, where condition 2 includes one or more of the following: the an SGCS corresponding to the first scheme is higher than an SGCS threshold; a GCS corresponding to the first scheme is higher than a GCS threshold; an MSE corresponding to the first scheme is higher than an MSE threshold; an NMSE corresponding to the first scheme is higher than an NMSE threshold; a probability that a SGCS corresponding to the first scheme is higher than a target SGCS is higher than a probability threshold; a probability that a GCS corresponding to the first scheme is higher than a target GCS is higher than a probability threshold; a probability that an MSE corresponding to the first scheme is higher than a target MSE is higher than a probability threshold; a probability that an NMSE corresponding to the first scheme is higher than a target NMSE is higher than a probability threshold; an SGCS corresponding to the first scheme is higher than a target SGCS, and a difference between the SGCS corresponding to the first scheme and the target SGCS is higher than an SGCS threshold; a GCS corresponding to the first scheme is higher than a target GCS, and a difference between the GCS corresponding to the first scheme and the target GCS is higher than a GCS threshold; an MSE corresponding to the first scheme is higher than a target MSE, and a difference between the MSE corresponding to the first scheme and the target MSE is higher than an MSE threshold; or an NMSE corresponding to the first scheme is higher than a target NMSE, and a difference between the NMSE corresponding to the first scheme and the target NMSE is higher than an NMSE threshold.

In some implementations, the expected CSI may be input information of the first scheme. Alternatively, the expected CSI may be label information corresponding to the model used by the first scheme. The embodiments of this application do not limit the expected CSI.

### Example 5: the first scheme is used for positioning

A positioning result is obtained by using the first scheme for positioning. If the positioning accuracy corresponding to the positioning result satisfies condition 1, then the monitoring result and/or evaluation result of the first scheme is determined to be abnormal, where condition 1 includes one or more of the following: positioning accuracy is lower than an accuracy threshold; a probability that the positioning accuracy is higher than the accuracy threshold is lower than a probability threshold.

Conversely, if the positioning accuracy corresponding to the positioning result satisfies condition 2, then the monitoring result and/or evaluation result of the first scheme is determined to be normal, where condition 2 includes one or more of the following: positioning accuracy is higher than an accuracy threshold; a probability that the positioning accuracy is higher than the accuracy threshold is higher than a probability threshold.

### Example 6: The first scheme is used for beam selection

Assume that a target beam among multiple beams is a beam with better communication quality. Accordingly, a beam selection result is obtained by using the first scheme to perform beam selection from the multiple beams. In some implementations, if the beam selection result does not include the target beam, then the monitoring result and/or evaluation result of the first scheme is determined to be abnormal. Conversely, if the beam selection result includes the target beam, then the monitoring result and/or evaluation result of the first scheme is determined to be normal. This scheme of determining the monitoring result and/or evaluation result of the first scheme based on whether the beam selection result includes the target beam helps simplify the complexity of the monitoring result and/or evaluation result.

In other implementations, if the beam selection result satisfies condition 1, then the monitoring result and/or evaluation result of the first scheme is determined to be abnormal, where condition 1 is associated with one or more of the following: a difference between the communication quality corresponding to the beam selection result and the communication quality corresponding to the target beam; an angular difference between the beam selected by the beam selection result and the target beam. The communication quality may be determined by one or more of the following: reference signal receiving power (reference signal receiving power, RSRP); reference signal receiving quality (reference signal receiving quality, RSRQ); signal to interference plus noise ratio (signal to interference plus noise ratio, SINR).

For example, condition 1 may include that the communication quality corresponding to the beam selection result is lower than the communication quality corresponding to the target beam. Taking the communication quality reflected by RSRP as an example, condition 1 may include that the RSRP corresponding to the beam selection result is lower than the RSRP corresponding to the target beam. Taking the communication quality reflected by RSRQ as an example, condition 1 may include that the RSRQ corresponding to the beam selection result is lower than the RSRQ corresponding to the target beam. Taking the communication quality reflected by SINR as an example, condition 1 may include that the SINR corresponding to the beam selection result is lower than the SINR corresponding to the target beam.

For another example, condition 1 may include that the angular difference between the beam selected by the beam selection result and the target beam is greater than a threshold.

Conversely, if the beam selection result satisfies condition 2, then the monitoring result and/or evaluation result of the first scheme is determined to be normal, where condition 2 is associated with one or more of the following: a difference between the communication quality corresponding to the beam selection result and the communication quality corresponding to the target beam; an angular difference between the beam selected by the beam selection result and the target beam. The communication quality may be determined by one or more of the following: RSRP; RSRQ; or SINR.

For example, condition 2 may include that the communication quality corresponding to the beam selection result is higher than the communication quality corresponding to the target beam. Taking the communication quality reflected by RSRP as an example, condition 2 may include that the RSRP corresponding to the beam selection result is lower than the RSRP corresponding to the target beam. Taking the communication quality reflected by RSRQ as an example, condition 2 may include that the RSRQ corresponding to the beam selection result is lower than the RSRQ corresponding to the target beam. Taking the communication quality reflected by SINR as an example, condition 2 may include that the SINR corresponding to the beam selection result is lower than the SINR corresponding to the target beam.

For another example, condition 2 may include that the angular difference between the beam selected by the beam selection result and the target beam is less than a threshold.

In the embodiments of this application, a manner of obtaining the parameters used in the various conditions mentioned above is not limited, where the parameters may include, for example, the thresholds and/or the target beam mentioned above. In some implementations, the parameters may be determined by one or more of the following: predefined information; preconfigured information; and configuration information transmitted by a network device to a terminal device. That the network device configures the above parameters for the terminal device through the configuration information may be understood as that the network device indicates the above parameters to the terminal device through the configuration information. In this case, the configuration information may also be referred to as "indication information".

In some implementations, the configuration information may be carried in one or more of the following: DCI, MAC CE, RRC signaling, RRC reconfiguration message, system broadcast, MIB, SIB1, or SIB.

In the embodiments of this application, the manner in which the configuration information configures the above parameters is not limited. For example, the configuration information may occupy one or more bits to configure (or indicate) the above parameters. In some scenarios, a data amount of the parameter indicated by the configuration information may vary, and a quantity of bits occupied by the configuration information may change slightly. In other scenarios, a data amount of the parameter indicated by the configuration information may vary, but a quantity of bits occupied by the configuration information may be the same.

In the embodiments of this application, a data amount of the parameter indicated by the configuration information and a quantity of bits occupied by the configuration information may be predetermined or preconfigured.

In the embodiments of this application, different conditions may have multiple implementation manners, and the multiple implementation manners may be used independently of each other, which helps reduce the complexity of judgment. Of course, in the embodiments of this application, the multiple implementation manners of different conditions may be used in combination with each other, which helps improve the accuracy of judgment.

The performance evaluation phase and the performance monitoring phase involved in the embodiments of this application are introduced above. In some scenarios, the above performance evaluation phase and the performance monitoring phase may be used independently. In other scenarios, the above performance evaluation phase and the performance monitoring phase may be used in combination with each other. For ease of understanding, the following takes the first device as an execution device and the second device as a performance monitoring/performance evaluation device as an example, and introduces a scenario where the performance evaluation phase and the performance monitoring phase are combined in the embodiments of this application with reference to FIG. 8.

As shown in FIG. 8, the process of determining whether the first scheme is used normally and whether it can continue to be used may be divided into three phases: a performance monitoring phase 810, a performance evaluation phase 820, and a performance judgment phase 830.

In the performance monitoring phase 810, the first device may use the first scheme to execute the first communication task, and accordingly, the second device monitors the performance of the first scheme to obtain a monitoring result. If the monitoring result indicates that the performance of the first scheme is abnormal, the second device may instruct the first device to enter the performance evaluation phase. Accordingly, if the monitoring result indicates that the performance of the first scheme is normal, the second device may instruct to suspend monitoring the performance of the first scheme.

In the performance evaluation phase 820, the first device may use the second scheme to execute the first communication task, and accordingly, the second device evaluates the performance of the first scheme to obtain an evaluation result.

In the performance judgment phase 830, if the evaluation result indicates that the evaluation result of the first scheme is abnormal, the first device may use the third scheme to execute the first communication task. If the evaluation result indicates that the evaluation result of the first scheme is normal, the first device may continue to use the first scheme to execute the first communication task.

It should be noted that, in the performance judgment phase, if the evaluation result indicates that the evaluation result of the first scheme is abnormal, the first device may also use the second scheme to execute the first communication task.

Based on the above introduction, it can be seen that the first device may be the performance monitoring/evaluation device and the execution device, or the first device may be the execution device, and the second device is the performance monitoring/evaluation device. The following takes different cases as examples and introduces the schemes for monitoring and evaluating the performance of the first scheme in the embodiments of this application with reference to FIG. 8 to FIG. 10. It should be understood that the judgment conditions and judgment manners used for the monitoring result and/or evaluation result may refer to the above introduction, and for the sake of brevity, they will not be repeated below.

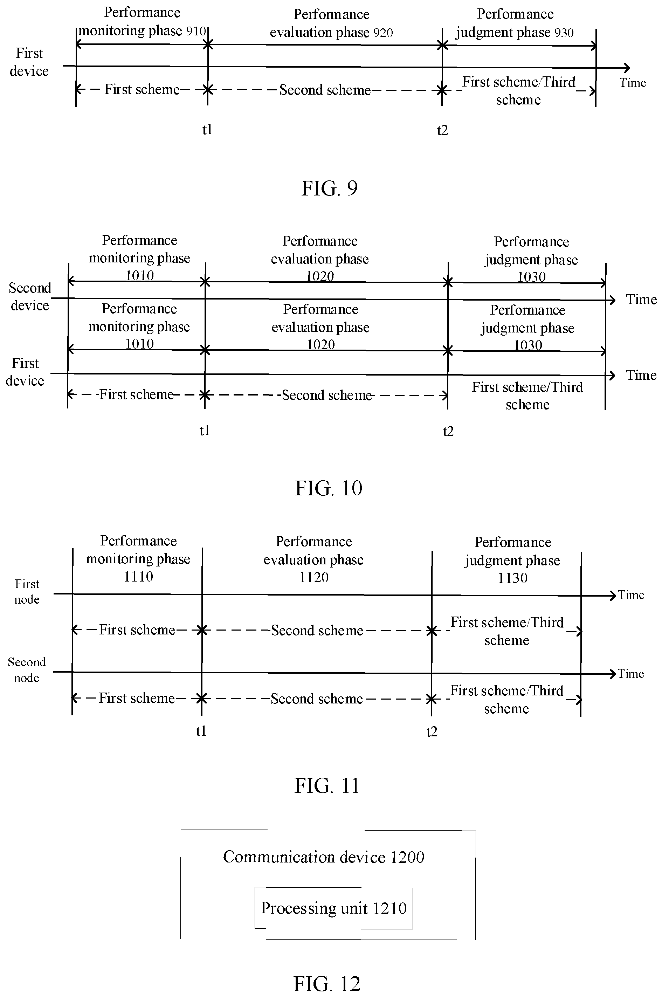

As shown in FIG. 9, it is assumed that both the performance monitoring/evaluation device and the execution device are the first device. In the performance monitoring phase 910, the first device may use the first scheme to execute the first communication task, and monitor the performance of the first scheme to obtain a monitoring result. If the monitoring result indicates that the performance of the first scheme is abnormal, the performance evaluation phase is entered at time t1. Accordingly, if the monitoring result indicates that the performance of the first scheme is normal, the second device may instruct to suspend monitoring the performance of the first scheme.

In the performance evaluation phase 920, the first device may use the second scheme to execute the first communication task, and evaluate the performance of the first scheme to obtain an evaluation result.

In the performance judgment phase 930, if the evaluation result indicates that the evaluation result of the first scheme is abnormal, the first device may use the third scheme to execute the first communication task at time t2. If the evaluation result indicates that the evaluation result of the first scheme is normal, the first device may continue to use the first scheme to execute the first communication task at time t2.

Referring to FIG. 10, it is assumed that a performance monitoring/evaluation device is the second device, and an execution device is the first device. In the performance monitoring phase 1010, the first device may use the first scheme to execute the first communication task, and accordingly, the second device monitors the performance of the first scheme to obtain a monitoring result. If the monitoring result indicates that the performance of the first scheme is abnormal, the second device instructs the first device to enter the performance evaluation phase at time t1.

In the performance evaluation phase 1020, the first device may use the second scheme to execute the first communication task, and accordingly, the second device evaluates the performance of the first scheme during time t1 to time t2 to obtain an evaluation result.

In the performance judgment phase 1030, if the evaluation result indicates that the evaluation result of the first scheme is abnormal, the first device may use the third scheme to execute the first communication task after time t2. If the evaluation result indicates that the evaluation result of the first scheme is normal, the first device may continue to use the first scheme to execute the first communication task after time t2.

Referring to FIG. 11, it is assumed that the performance monitoring/evaluation device is a second device, and the execution devices are a first device and the second device. In the performance monitoring phase, the first device and the second device may use a first scheme to execute a first communication task. Correspondingly, the second device monitors the performance of the first scheme and obtains a monitoring result. If the monitoring result indicates that the performance of the first scheme is abnormal, the second device instructs the first device to enter a performance evaluation phase at time t1.

In the performance evaluation phase, both the first device and the second device may use a second scheme to execute the first communication task. Correspondingly, the second device evaluates the performance of the first scheme from time t1 to time t2 and obtains an evaluation result.

In the performance judgment phase, if the evaluation result indicates that the evaluation result of the first scheme is abnormal, the first device and the second device may use a third scheme to execute the first communication task after time t2. If the evaluation result indicates that the evaluation result of the first scheme is normal, the first device and the second device may continue to use the first scheme to execute the first communication task after time t2.

In an embodiment of the present application, if the second device is a network device and the first device is a terminal device, the method for the second device to transmit information to the first device (e.g., transmitting one or more of first indication information, second indication information, or third indication information) may adopt one or more of the following manners to transmit information to the terminal device.

Manner 1: transmitting via a broadcast message, where the broadcast message may include an MIB, a SIB1, and a SIBx. Manner 2: transmitting via an RRC message. Manner 3: transmitting via a MAC CE. Manner 4: transmitting via a DCI message. Manner 5: transmitting via a downlink message in a random access procedure, where the downlink message may include, for example, MsgB, Msg2, and Msg4. Manner 6: transmitting via PDCCH. Manner 7: transmitting via PDSCH. Manner 8: transmitting via an AI/ML dedicated downlink channel.

If the second device is a terminal device and the first device is a network device, the method for the second device to transmit information to the first device (e.g., transmitting one or more of first indication information, second indication information, or third indication information) may adopt one or more of the following manners to transmit information to the terminal device.

Manner 1: transmitting via an RRC message. Manner 2: transmitting via UCI. Manner 3: transmitting via an uplink message in a random access procedure, where the uplink message in the random access procedure may include MsgA and Msg3. Manner 4: transmitting via PUCCH. Manner 5: transmitting via PUSCH. Manner 6: transmitting via an AI/ML dedicated uplink channel. Manner 7: transmitting via UE capability reporting.

The method embodiments of the present application have been described in detail above with reference to FIG. 1 to FIG. 11. The apparatus embodiments of the present application will be described in detail below with reference to FIG. 12 to FIG. 14. It should be understood that the description of the method embodiments and the description of the apparatus embodiments correspond to each other; therefore, parts not described in detail may refer to the preceding method embodiments.

FIG. 12 is a schematic diagram of a communication device according to an embodiment of the present application. The communication device 1200 shown in FIG. 12 is a first device, and the communication device 1200 includes: a processing unit 1210.

The processing unit 1210 is configured to, in response to a first event occurring, switch a scheme for executing a first communication task from a first scheme to a second scheme, where the first event includes performing a performance evaluation on performance of the first scheme.

In some implementations, the first event is triggered based on one or more of the following: abnormal performance of the first scheme; or first indication information transmitted by a second device, where the first indication information is used to trigger a performance evaluation on the performance of the first scheme.

In some implementations, the abnormal performance of the first scheme is determined based on one or more of the following: performance of executing the first communication task once using the first scheme; performance of executing the first communication task multiple times using the first scheme; performance of executing the first communication task using the first scheme within a first time period.

In some implementations, generalization performance of the model used by the second scheme is higher than generalization performance of the model used by the first scheme.

In some implementations, the second scheme is a scheme that does not use a model.

In some implementations, the communication device further includes: a first receiving unit, configured to receive second indication information transmitted by the second device, where the second indication information is used to indicate that the first device uses the second scheme after the first event occurs.

In some implementations, the second indication information is used to indicate a second model used by the second scheme.

In some implementations, the processing unit is further configured to: in response to an abnormal evaluation result of the performance evaluation, execute the first communication task based on a third scheme, where the third scheme is different from the first scheme.

In some implementations, the processing unit is further configured to: in response to an abnormal evaluation result of the performance evaluation, execute the first communication task based on the second scheme.

In some implementations, the processing unit is further configured to: in response to a normal evaluation result of the performance evaluation, execute the first communication task using the first scheme.

In some implementations, the communication device further includes: a second receiving unit, configured to receive third indication information transmitted by the second device, where the third indication information is used to indicate whether the evaluation result of the performance evaluation is abnormal.

In some implementations, the evaluation result of the performance evaluation is determined based on one or more of the following: performance of executing the first communication task once using the first scheme; performance of executing the first communication task multiple times using the first scheme; performance of executing the first communication task using the first scheme within a second time period.

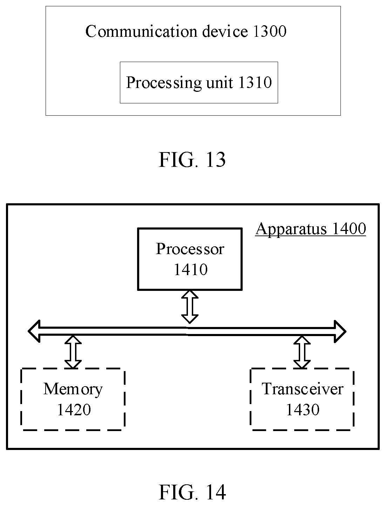

FIG. 13 is a schematic diagram of a communication device according to an embodiment of the present application. The communication device 1300 shown in FIG. 13 is a second device, and the communication device 1300 includes: a transmitting unit 1310.

The transmitting unit 1310 is configured to transmit first indication information to a first device, where the first indication information is used to trigger a performance evaluation on the performance of a first scheme, the first scheme is used to execute a first communication task, and the first communication task is executed based on a second scheme during the performance evaluation.

In some implementations, the first indication information is triggered by abnormal performance of the first scheme.

In some implementations, the abnormal performance of the first scheme is determined based on one or more of the following: performance of executing the first communication task once using the first scheme; performance of executing the first communication task multiple times using the first scheme; performance of executing the first communication task using the first scheme within a first time period.

In some implementations, generalization performance of the model used by the second scheme is higher than generalization performance of the model used by the first scheme.

In some implementations, the second scheme is a scheme that does not use a model.

In some implementations, the transmitting unit is configured to transmit second indication information to the first device, where the second indication information is used to indicate that the first communication task is executed using the second scheme during the performance evaluation.

In some implementations, the second indication information is used to indicate a second model used by the second scheme.

In some implementations, the transmitting unit is configured to transmit third indication information to the first device, where the third indication information is used to indicate whether the evaluation result of the performance evaluation is abnormal.

In some implementations, the evaluation result of the performance evaluation is determined based on one or more of the following: performance of executing the first communication task once using the first scheme; performance of executing the first communication task multiple times using the first scheme; performance of executing the first communication task using the first scheme within a second time period.

In an optional embodiment, the processing unit 1210 may be a processor 1410. The communication device 1200 may further include a transceiver 1430 and a memory 1420, as specifically shown in FIG. 14.

In an optional embodiment, the transmitting unit 1310 may be a transceiver 1430. The communication device 1300 may further include a processor 1410 and a memory 1420, as specifically shown in FIG. 14.

FIG. 14 is a schematic structural diagram of a communication apparatus according to an embodiment of the present application. The dashed lines in FIG. 14 indicate that the unit or module is optional. The apparatus 1400 may be used to implement the methods described in the above method embodiments. The apparatus 1400 may be a chip, a terminal device, or a network device.

The apparatus 1400 may include one or more processors 1410. The processor 1410 may support the apparatus 1400 in implementing the methods described in the preceding method embodiments. The processor 1410 may be a general-purpose processor or a special-purpose processor. For example, the processor may be a central processing unit (central processing unit, CPU). Alternatively, the processor may be other general-purpose processors, digital signal processors (digital signal processor, DSP), application specific integrated circuits (application specific integrated circuit, ASIC), field programmable gate arrays (field programmable gate array, FPGA) or other programmable logic devices, discrete gate or transistor logic devices, discrete hardware components, etc. A general-purpose processor may be a microprocessor or the processor may be any conventional processor, etc.

The apparatus 1400 may further include one or more memories 1420. The memory 1420 stores a program, and the program may be executed by the processor 1410, so that the processor 1410 executes the method described in the foregoing method embodiments. The memory 1420 may be independent of or integrated into the processor 1410.

The apparatus 1400 may further include a transceiver 1430. The processor 1410 may communicate with other devices or chips via the transceiver 1430. For example, the processor 1410 may transmit and receive data with other devices or chips via the transceiver 1430.

An embodiment of the present application also provides a computer-readable storage medium for storing a program. The computer-readable storage medium may be applied to the terminal or network device provided in the embodiments of the present application, and the program causes a computer to execute the methods executed by the terminal or network device in the various embodiments of the present application.

An embodiment of the present application also provides a computer program product. The computer program product includes a program. The computer program product may be applied to the terminal or network device provided in the embodiments of the present application, and the program causes a computer to execute the methods executed by the terminal or network device in the various embodiments of the present application.

An embodiment of the present application also provides a computer program. The computer program may be applied to the terminal or network device provided in the embodiments of the present application, and the computer program causes a computer to execute the methods executed by the terminal or network device in the various embodiments of the present application.

It should be understood that the terms "system" and "network" in this application may be used interchangeably. In addition, the terms used in this application are only for explaining specific embodiments of this application and are not intended to limit this application. The terms "first", "second", "third", and "fourth" in the specification and claims of this application and the accompanying drawings are used to distinguish different objects, not to describe a specific order. Furthermore, the terms "including" and "having" and any variations thereof are intended to cover non-exclusive inclusion.

In the embodiments of this application, the mentioned "indication" may be a direct indication, an indirect indication, or an indication of an association relationship. For example, A indicates B, which may mean that A directly indicates B, e.g., B can be obtained through A; it may also mean that A indirectly indicates B, e.g., A indicates C, and B can be obtained through C; it may also mean that there is an association relationship between A and B.

In the embodiments of this application, "B corresponding to A" means that B is associated with A, and B can be determined based on A. However, it should also be understood that determining B based on A does not mean determining B solely based on A; B may also be determined based on A and/or other information.

In the embodiments of this application, the term "corresponding" may indicate a direct or indirect correspondence between two things, or an association relationship between them, or a relationship such as indication and being indicated, configuration and being configured.

In the embodiments of this application, "predefined" or "preconfigured" may be implemented by pre-storing corresponding codes, tables, or other methods that can be used to indicate relevant information in a device (e.g., including a terminal device and a network device). This application does not limit the specific implementation method. For example, predefined may refer to what is defined in a protocol.

In the embodiments of this application, the "protocol" may refer to a standard protocol in the communication field, which may include, for example, the LTE protocol, the NR protocol, and related protocols applied in future communication systems. This application does not limit this.

The term "and/or" in the embodiments of this application is merely an association relationship describing associated objects, indicating that three relationships may exist. For example, A and/or B may represent: A alone exists, A and B exist simultaneously, and B alone exists. In addition, the character "/" in this document generally indicates that the associated objects are in an "or" relationship.

In various embodiments of this application, sequence numbers of the foregoing processes do not mean execution sequences. The execution sequences of the processes should be determined according to functions and internal logic of the processes, and should not be construed as any limitation on the implementation processes of embodiments of this application.

In the several embodiments provided in this application, it should be understood that the disclosed system, apparatus, and method may be implemented in other ways. For example, the apparatus embodiments described above are merely illustrative. For example, the division of the units is merely a logical function division, and there may be other division methods in actual implementation. For example, multiple units or components may be combined or integrated into another system, or some features may be ignored or not executed. In another aspect, the mutual coupling or direct coupling or communication connection shown or discussed may be through some interfaces, indirect coupling or communication connection of devices or units, and may be in electrical, mechanical, or other forms.

The units described as separate components may or may not be physically separate, and the components shown as units may or may not be physical units, i.e., they may be located in one place or distributed over multiple network units. Some or all of the units may be selected according to actual needs to achieve the purpose of the solution of this embodiment.

In addition, the functional units in the various embodiments of this application may be integrated into one processing unit, or each unit may exist physically separately, or two or more units may be integrated into one unit.

In the above embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions described in the embodiments of this application are generated in whole or in part. The computer may be a general-purpose computer, a special-purpose computer, a computer network, or other programmable apparatus. The computer instructions may be stored in a computer-readable storage medium or transmitted from one computer-readable storage medium to another computer-readable storage medium. For example, the computer instructions may be transmitted from a website site, computer, server, or data center to another website site, computer, server, or data center via wired (e.g., coaxial cable, optical fiber, digital subscriber line (digital subscriber line, DSL)) or wireless (e.g., infrared, wireless, microwave) means. The computer-readable storage medium may be any available medium that can be accessed by a computer or a data storage device such as a server, data center, etc., that integrates one or more available media. The available medium may be a magnetic medium (e.g., a floppy disk, hard disk, magnetic tape), an optical medium (e.g., a digital video disc (digital video disc, DVD)), or a semiconductor medium (e.g., a solid state disk (solid state disk, SSD)), etc.

The above is only a specific implementation of this application, but the protection scope of this application is not limited thereto. Any person skilled in the art can easily think of changes or substitutions within the technical scope disclosed in this application, which should be covered within the protection scope of this application. Therefore, the protection scope of this application should be based on the protection scope of the claims.

## Claims

1. A wireless communication method, comprising:
in response to occurrence of a first event, switching, by a first device, a scheme for executing a first communication task from a first scheme to a second scheme, wherein the first event comprises performing a performance evaluation on performance of the first scheme.

2. The method according to claim 1, wherein the first event is triggered based on one or more of the following:
abnormal performance of the first scheme; or
first indication information transmitted by a second device, wherein the first indication information is used to trigger a performance evaluation on the performance of the first scheme.

3. The method according to claim 2, wherein the abnormal performance of the first scheme is determined based on one or more of the following:
performance of executing the first communication task once using the first scheme;
performance of executing the first communication task multiple times using the first scheme; or
performance of executing the first communication task using the first scheme within a first time period.

4. The method according to any one of claims 1 to 3, wherein generalization performance of a model used by the second scheme is higher than generalization performance of a model used by the first scheme.

5. The method according to any one of claims 1 to 3, wherein the second scheme is a scheme that does not use a model.

6. The method according to any one of claims 1 to 5, wherein before switching, by the first device, the scheme for executing the first communication task from the first scheme to the second scheme, the method further comprises:
receiving, by the first device, second indication information transmitted by a second device, wherein the second indication information is used to indicate that the first device uses the second scheme after the first event occurs.

7. The method according to claim 6, wherein the second indication information is used to indicate a second model used by the second scheme.

8. The method according to any one of claims 1 to 7, wherein the method further comprises:
in response to an abnormal evaluation result of the performance evaluation, executing, by the first device, the first communication task based on a third scheme, wherein the third scheme is different from the first scheme.

9. The method according to any one of claims 1 to 7, wherein the method further comprises:
in response to an abnormal evaluation result of the performance evaluation, executing, by the first device, the first communication task based on the second scheme.

10. The method according to any one of claims 1 to 9, wherein the method further comprises:
in response to a normal evaluation result of the performance evaluation, executing, by the first device, the first communication task using the first scheme.

11. The method according to any one of claims 9 to 10, wherein the method further comprises:
receiving, by the first device, third indication information transmitted by a second device, wherein the third indication information is used to indicate whether the evaluation result of the performance evaluation is abnormal.

12. The method according to any one of claims 8 to 11, wherein the evaluation result of the performance evaluation is determined based on one or more of the following:
performance of executing the first communication task once using the first scheme;
performance of executing the first communication task multiple times using the first scheme; or
performance of executing the first communication task using the first scheme within a second time period.

13. A wireless communication method, comprising:
transmitting, by a second device, first indication information to a first device, wherein the first indication information is used to trigger a performance evaluation on performance of a first scheme, the first scheme is used to execute a first communication task, and the first communication task is executed based on a second scheme during the performance evaluation.

14. The method according to claim 13, wherein the first indication information is triggered by abnormal performance of the first scheme.

15. The method according to claim 14, wherein the abnormal performance of the first scheme is determined based on one or more of the following:
performance of executing the first communication task once using the first scheme;
performance of executing the first communication task multiple times using the first scheme; or
performance of executing the first communication task using the first scheme within a first time period.

16. The method according to any one of claims 13 to 15, wherein generalization performance of a model used by the second scheme is higher than generalization performance of a model used by the first scheme.

17. The method according to any one of claims 13 to 15, wherein the second scheme is a scheme that does not use a model.

18. The method according to any one of claims 13 to 15, wherein the method further comprises:
transmitting, by the second device, second indication information to the first device, wherein the second indication information is used to indicate that the first communication task is executed using the second scheme during the performance evaluation.

19. The method according to claim 18, wherein the second indication information is used to indicate a second model used by the second scheme.

20. The method according to any one of claims 13 to 19, wherein the method further comprises:
transmitting, by the second device, third indication information to the first device, wherein the third indication information is used to indicate whether the evaluation result of the performance evaluation is abnormal.

21. The method according to claim 20, wherein the evaluation result of the performance evaluation is determined based on one or more of the following:
performance of executing the first communication task once using the first scheme;
performance of executing the first communication task multiple times using the first scheme; or
performance of executing the first communication task using the first scheme within a second time period.

22. A communication device, wherein the communication device is a first device and comprises:
a processing unit, configured to, in response to occurrence of a first event, switch a scheme for executing a first communication task from a first scheme to a second scheme, wherein the first event comprises performing a performance evaluation on performance of the first scheme.

23. The communication device according to claim 22, wherein the first event is triggered based on one or more of the following:
abnormal performance of the first scheme; or
first indication information transmitted by a second device, wherein the first indication information is used to trigger a performance evaluation on the performance of the first scheme.

24. The communication device according to claim 23, wherein the abnormal performance of the first scheme is determined based on one or more of the following:
performance of executing the first communication task once using the first scheme;
performance of executing the first communication task multiple times using the first scheme; or
performance of executing the first communication task using the first scheme within a first time period.

25. The communication device according to any one of claims 22 to 24, wherein generalization performance of a model used by the second scheme is higher than generalization performance of a model used by the first scheme.

26. The communication device according to any one of claims 22 to 24, wherein the second scheme is a scheme that does not use a model.

27. The communication device according to any one of claims 22 to 26, wherein the communication device further comprises:
a first receiving unit, configured to receive second indication information transmitted by a second device, wherein the second indication information is used to indicate that the first device uses the second scheme after the first event occurs.

28. The communication device according to claim 27, wherein the second indication information is used to indicate a second model used by the second scheme.

29. The communication device according to any one of claims 22 to 28, wherein the processing unit is further configured to:
in response to an abnormal evaluation result of the performance evaluation, execute the first communication task based on a third scheme, wherein the third scheme is different from the first scheme.

30. The communication device according to any one of claims 22 to 28, wherein the processing unit is further configured to:
in response to an abnormal evaluation result of the performance evaluation, execute the first communication task based on the second scheme.

31. The communication device according to any one of claims 22 to 30, wherein the processing unit is further configured to:
in response to a normal evaluation result of the performance evaluation, execute the first communication task using the first scheme.

32. The communication device according to any one of claims 30 to 31, wherein the communication device further comprises:
a second receiving unit, configured to receive third indication information transmitted by a second device, wherein the third indication information is used to indicate whether the evaluation result of the performance evaluation is abnormal.

33. The communication device according to any one of claims 29 to 32, wherein the evaluation result of the performance evaluation is determined based on one or more of the following:
performance of executing the first communication task once using the first scheme;
performance of executing the first communication task multiple times using the first scheme; or
performance of executing the first communication task using the first scheme within a second time period.

34. A communication device, wherein the communication device is a second device and comprises:
a transmitting unit, configured to transmit first indication information to a first device, wherein the first indication information is used to trigger a performance evaluation on performance of a first scheme, the first scheme is used to execute a first communication task, and the first communication task is executed based on a second scheme during the performance evaluation.

35. The communication device according to claim 34, wherein the first indication information is triggered by abnormal performance of the first scheme.

36. The communication device according to claim 35, wherein the abnormal performance of the first scheme is determined based on one or more of the following:
performance of executing the first communication task once using the first scheme;
performance of executing the first communication task multiple times using the first scheme;
performance of executing the first communication task using the first scheme within a first time period.

37. The communication device according to any one of claims 34 to 36, wherein generalization performance of a model used by the second scheme is higher than generalization performance of a model used by the first scheme.

38. The communication device according to any one of claims 34 to 36, wherein the second scheme is a scheme that does not use a model.

39. The communication device according to any one of claims 34 to 36, wherein the transmitting unit is configured to transmit second indication information to the first device, and the second indication information is used to indicate that the first communication task is executed using the second scheme during the performance evaluation.

40. The communication device according to claim 39, wherein the second indication information is used to indicate a second model used by the second scheme.

41. The communication device according to any one of claims 34 to 40, wherein the transmitting unit is configured to transmit third indication information to the first device, and the third indication information is used to indicate whether the evaluation result of the performance evaluation is abnormal.

42. The communication device according to claim 41, wherein the evaluation result of the performance evaluation is determined based on one or more of the following:
performance of executing the first communication task once using the first scheme;
performance of executing the first communication task multiple times using the first scheme; or
performance of executing the first communication task using the first scheme within a second time period.

43. A communication device, comprising a transceiver, a memory, and a processor, the memory is configured to store a program, and the processor is configured to invoke the program in the memory and control the transceiver to receive or transmit a signal, to cause the communication device to execute the method according to any one of claims 1 to 21.

44. An apparatus, comprising a processor, configured to invoke a program from a memory, to cause the apparatus to execute the method according to any one of claims 1 to 21.

45. A chip, comprising a processor, configured to invoke a program from a memory, to cause a device installed with the chip to execute the method according to any one of claims 1 to 21.

46. A computer-readable storage medium, wherein the computer-readable storage medium stores a program, and the program causes a computer to execute the method according to any one of claims 1 to 21.

47. A computer program product, comprising a program, the program causes a computer to execute the method according to any one of claims 1 to 21.

48. A computer program, wherein the computer program causes a computer to execute the method according to any one of claims 1 to 21.
